(19) Europäisches Patentamt
European Patent Office
Office européen des brevets

(11) **EP 4 769 020 A1**

(12) **EUROPEAN PATENT APPLICATION**
published in accordance with Art. 153(4) EPC

(43) Date of publication:
01.07.2026 Bulletin 2026/27

(21) Application number: 23953168.4

(22) Date of filing: 22.09.2023

(51) International Patent Classification (IPC):
$G03B\ 21/14^{(2006.01)}$  $G03B\ 21/28^{(2006.01)}$
$G03B\ 21/53^{(2006.01)}$  $G03B\ 21/60^{(2014.01)}$
$B60K\ 35/00^{(2024.01)}$

(52) Cooperative Patent Classification (CPC):
B60K 35/00; G03B 21/14; G03B 21/28;
G03B 21/53; G03B 21/60

(86) International application number:
PCT/KR2023/014473

(87) International publication number:
WO 2025/063343 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: LG Electronics Inc.
Yeongdeungpo-gu
Seoul 07336 (KR)

(72) Inventors:
• KIM, Jinyong
Seoul 06772 (KR)
• JUNG, Youngho
Seoul 06772 (KR)
• HWANG, Jooyong
Seoul 06772 (KR)

(74) Representative: Vossius & Partner
Patentanwälte Rechtsanwälte mbB
Siebertstraße 3
81675 München (DE)

(54) **DISPLAY DEVICE FOR VEHICLE**

(57) The present disclosure relates to a display apparatus for a vehicle. A display apparatus for a vehicle according to an embodiment of the present disclosure includes: a picture generation device including a light output device and configured to output a projection image; an optical path separator configured to reflect a first projection image, which is a part of the projection image; a screen having one surface onto which the first projection image reflected by the optical path separator is projected; a viewing angle adjustment panel including a liquid crystal layer composed of liquid crystal molecules to allow at least part of light emitted from the screen to pass through; and a signal processing device configured to output a signal for adjusting an arrangement of the liquid crystal molecules to the viewing angle adjustment panel such that a viewing angle for one area of the screen is adjusted, wherein a second projection image, which is another part of the projection image, is projected onto a windshield. Other various embodiments are possible.

FIG. 1

## Description

[Technical Field]

The present disclosure relates to a display apparatus for a vehicle.

[Background Art]

A vehicle refers to a means of transporting people or goods by using kinetic energy. A representative example of a vehicle is a car.

Vehicles are increasingly equipped with various sensors and electronic devices for the convenience or safety of a vehicle user. In particular, one or more displays capable of displaying information associated with vehicle driving or content for the user's convenience are provided in a vehicle. A display is designed to display an image that can be viewed by a user. For example, a display is provided in a cluster of a vehicle to display various types of information. Meanwhile, in order to display vehicle driving information, various displays, such as an audio video navigation (AVN) display and a head-up display for projecting an image onto a windshield, are increasingly being installed in vehicles, in addition to the cluster. As various displays are provided in vehicles, research has been conducted to implement the displays in an integrated manner.

Meanwhile, Japanese Laid-Open Patent Publication No. JPH11-59224 (Patent Document 1), which is hereby incorporated by reference, discloses a front window display device for adjusting the brightness of a window display device (HUD) using data of an illuminance sensor. However, only a window display device is disclosed in Patent Document 1, and thus, it is not suitable for implementing various displays in an integrated manner.

Meanwhile, U.S. Pat. No. US10298890 (Patent Document 2), which is hereby incorporated by reference, discloses a vehicle display device for providing a cluster display by projecting an image. However, only a cluster display is disclosed in Patent Document 2, and thus, it is not suitable for implementing various displays in an integrated manner.

[Disclosure]

[Technical Problem]

It is an objective of the present disclosure to solve the above and other problems.

It is another objective of the present disclosure to provide a display apparatus for a vehicle that can adjust a viewing angle for a display.

It is another objective of the present disclosure to provide a display apparatus for a vehicle that can adjust a display area where a viewing angle is adjustable in various manners.

It is another objective of the present disclosure to provide a display apparatus for a vehicle that can protect a particular person in the vehicle from privacy exposure to another person in the vehicle.

[Technical Solution]

In accordance with an aspect of the present disclosure, the above and other objectives can be accomplished by providing a display apparatus for a vehicle, the display apparatus including: a picture generation device including a light output device and configured to output a projection image; an optical path separator configured to reflect a first projection image, which is a part of the projection image; a screen having one surface onto which the first projection image reflected by the optical path separator is projected; a viewing angle adjustment panel including a liquid crystal layer composed of liquid crystal molecules to allow at least part of light emitted from the screen to pass through; and a signal processing device configured to output a signal for adjusting an arrangement of the liquid crystal molecules to the viewing angle adjustment panel such that a viewing angle for one area of the screen is adjusted, wherein a second projection image, which is another part of the projection image, is projected onto a windshield.

In accordance with another aspect of the present disclosure, the above and other objectives can be accomplished by providing a display apparatus for a vehicle, the display apparatus including: a picture generation device including a light output device and configured to output a projection image; an optical path separator configured to reflect a first projection image, which is a part of the projection image; a screen having one surface onto which the first projection image reflected by the optical path separator is projected; a focus variable unit disposed between the optical path separator and the screen so as to change a focus of at least a part of the first projection image reflected by the optical path separator; and a signal processing device configured to output a signal for adjusting the focus such that a viewing angle for one area of the screen is adjusted, wherein a second projection image, which is another part of the projection image, is projected onto a windshield.

[Advantageous Effects]

A display apparatus for a vehicle according to an embodiment of the present has the following effects.

According to at least one of the embodiments of the present disclosure, it is possible to adjust a viewing angle for a display.

According to at least one of the embodiments of the present disclosure, it is possible to adjust a display area where a viewing angle is adjustable in various manners.

According to at least one of the embodiments of the present disclosure, it is possible to protect a particular person in a vehicle from privacy exposure to another person in the vehicle.

Further scope of applicability of the present disclosure will become apparent from the following detailed description. However, it should be understood that the detailed description and specific embodiments such as preferred embodiments of the present disclosure are given by way of example only, since various changes and modifications within the idea and scope of the present disclosure may be clearly understood by those skilled in the art.

[Brief Description of Drawings]

FIG. 1 illustrates an example of the exterior and interior of a vehicle according to an embodiment of the present disclosure.

FIG. 2 illustrates the outer appearance of a display apparatus for vehicle according to an embodiment of the present disclosure.

FIG. 3 illustrates an internal block diagram of a display apparatus for vehicle according to an embodiment of the present disclosure.

FIGS. 4A to 4C illustrate the internal configuration of a display apparatus for vehicle according to various embodiments of the present disclosure.

FIGS. 5 and 6 are reference diagrams for explaining the operation of a display apparatus for vehicle according to an embodiment of the present disclosure.

FIGS. 7A and 7B are internal block diagrams of a display apparatus for vehicle according to various embodiments of the present disclosure.

FIGS. 8 to 10 are reference diagrams for explaining the operation of a picture generation device according to an embodiment of the present disclosure.

FIGS. 11 to 28 are reference diagrams for explaining the operation of adjusting a viewing angle of a display apparatus for vehicle according to various embodiments of the present disclosure.

FIGS. 29A to 29D are reference diagrams for explaining a focus variable unit of a display apparatus for vehicle according to an embodiment of the present disclosure.

FIG. 30 is a flowchart illustrating a method of operating a display apparatus for vehicle according to an embodiment of the present disclosure.

FIGS. 31 to 46 are reference diagrams for explaining the operation of a display apparatus for vehicle according to various embodiments of the present disclosure.

[Mode for the Invention]

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

The suffixes "module" and "unit" used in the following description are given simply in view of the ease of the description, and do not carry any important meaning or role. Therefore, the "module" and the "unit" may be used interchangeably.

It will be understood that the terms "comprises or includes," "has," etc., when used in this specification, specify the presence of stated features, integers, steps, operations, elements, components, or combinations thereof, but do not preclude the presence or addition of one or more other features, integers, steps, operations, elements, components, or combinations thereof.

It will be further understood that although the terms "first," "second," etc. are used herein to describe various components, these components should not be limited by these terms. These terms are only used to distinguish one component from another component.

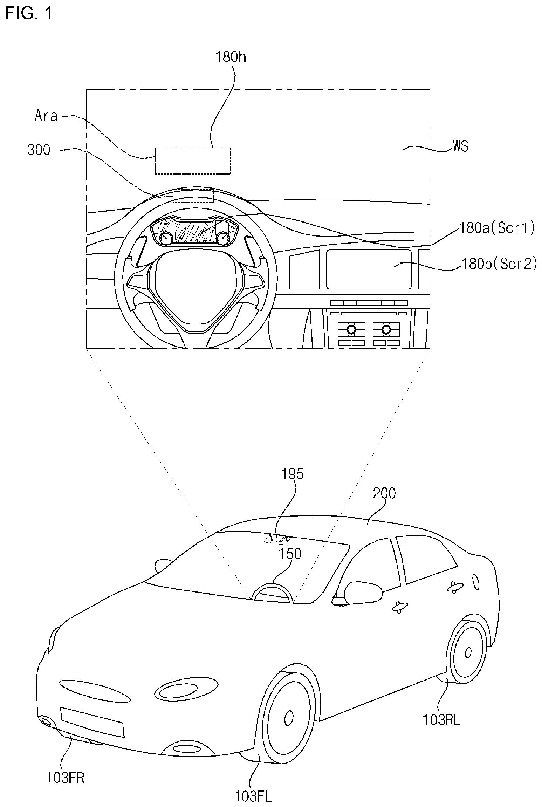

FIG. 1 illustrates an example of the exterior and interior of a vehicle according to an embodiment of the present disclosure.

Referring to FIG.1, a vehicle 200 may include a plurality of wheels 103FR, 103FL, 103RL,... rotated by a power source, and a steering wheel 150 to adjust a traveling direction of the vehicle 200.

The vehicle 200 may further include a camera 195 to acquire an image of the front of the vehicle 200.

The vehicle 200 may further include therein a plurality of displays 180a, 180b, and 180h to display an image, information, etc. For example, a first display 180a may be a cluster display. For example, a second display 180b may be an audio video navigation (AVN) display. For example, a third display 180h may be a head-up display (HUD) that projects an image on a predetermined area Ara of a windshield WS.

Meanwhile, in the present disclosure, the plurality of displays 180a, 180b, and 180h may be integrated to be implemented as a single device.

To this end, a display apparatus for vehicle or vehicle display apparatus 100 according to embodiments of the present disclosure may include a picture generation device 300.

That is, the vehicle display apparatus 100 according to embodiments of the present disclosure may output a plurality of projection images using a single light output device 400, and may separate optical paths of the plurality of projection images so that a first projection image is projected onto a first screen Scr1 through a first optical path to thereby display cluster information, a second projection image is projected onto a windshield WS through a second optical path to thereby display vehicle driving information, and a third projection image is projected onto a second screen Scr2 through a third optical path to thereby display content information. Accordingly, the plurality of displays may be implemented in an integrated manner.

Meanwhile, the vehicle 200 described herein may be a concept including all of an internal combustion engine vehicle having an engine as a power source, a hybrid vehicle having an engine and an electric motor as power sources, and an electric vehicle having an electric motor as a power source.

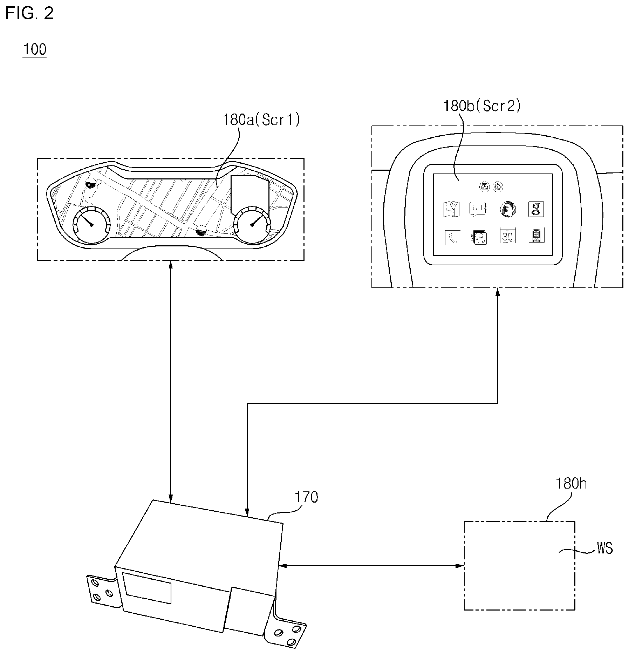

FIG. 2 illustrates the outer appearance of a display apparatus for vehicle according to an embodiment of the present disclosure.

Referring to FIG. 2, the vehicle display apparatus 100 may include a signal processing device 170 configured to perform signal processing to display an image and information on at least one of a plurality of displays 180a, 180b, and 180h.

Among the plurality of displays 180a, 180b, and 180h, a first display 180a may be a cluster display 180a for displaying a driving state, operation information, and the like, a second display 180b may be an audio video navigation (AVN) display 180b for displaying vehicle driving information, a navigation map, and various types of entertainment information or images, and a third display 180h may be an HUD display for displaying vehicle driving information.

The signal processing device 170 may include therein a memory 508 and a processor 175 to control at least one of the plurality of displays 180a, 180b, and 180h.

Meanwhile, the signal processing device 170 may execute first to third virtual machines on a hypervisor in the processor 175.

The first virtual machine (not shown), which is a server virtual machine, may control the second virtual machine (not shown) and the third virtual machine (not shown), which are guest virtual machines.

The second virtual machine may be referred to as a first guest virtual machine, and the third virtual machine may be referred to as a second guest virtual machine.

The first guest virtual machine (not shown) may be operated for the first display 180a, and the second guest virtual machine (not shown) may be operated for the second display 180b or the third display 180h.

Meanwhile, the server virtual machine (not shown) in the processor 175 may be configured to set the memory 508 based on the hypervisor for transmission of the same data to the first guest virtual machine (not shown) and the second guest virtual machine (not shown). Accordingly, the first display 180a and the second display 180b in the vehicle may display the same information or the same image in a synchronized manner.

Meanwhile, the server virtual machine (not shown) in the processor 175 may receive and process wheel speed sensor data of the vehicle so as to transmit the processed wheel speed sensor data to at least one of the first guest virtual machine (not shown) and the second guest virtual machine (not shown). Accordingly, at least one virtual machine may share the wheel speed sensor data of the vehicle.

Thus, it is possible to control the plurality of displays 180a, 180b, and 180h by using a single signal processing device 170.

Meanwhile, one or some of the plurality of displays 180a, 180b, and 180h may operate under a Linux-based operating system (OS), and the other(s) may operate under a Web-based operating system (OS).

In some embodiments, the signal processing device 170 may control the plurality of displays 180a, 180b, and 180h operating under different operating systems (OS) to display the same information or the same image in a synchronized manner.

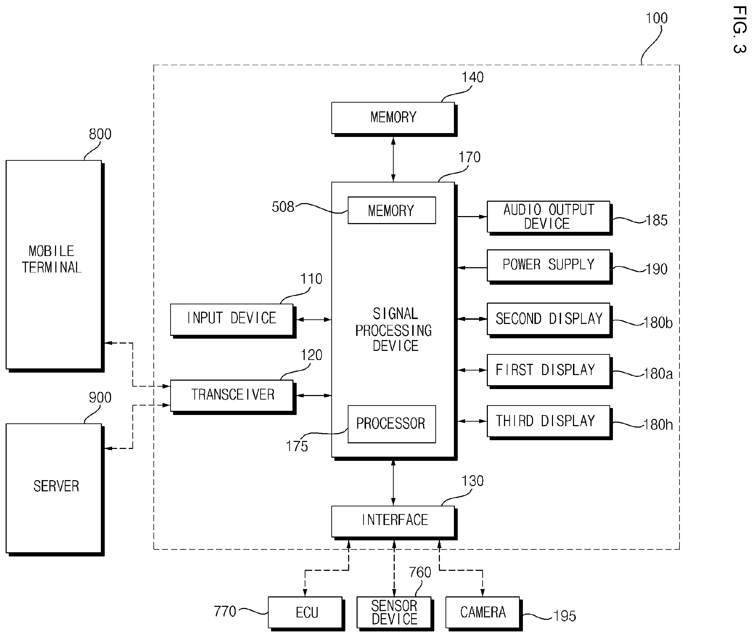

FIG. 3 illustrates an internal block diagram of a display apparatus for vehicle according to an embodiment of the present disclosure.

Referring to FIG. 3, the vehicle display apparatus 100 according to an embodiment of the present disclosure may include an input device 110, a transceiver 120, an interface 130, a memory 140, a signal processing device 170, a plurality of displays 180a, 180b, and 180h, an audio output device 185, and/or a power supply 190.

The input device 110 may include a physical button or pad for a button input or a touch input.

The input device 110 may include a microphone (not shown) for receiving a user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, Wi-Fi Direct, APIX, and the like, may be used as a wireless data communication scheme.

The transceiver 120 may receive weather information and road traffic condition information, e.g., transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 760, and may transmit the received information to the signal processing device 170.

Here, the sensor information may include at least one of vehicle heading information, vehicle location information (global positioning system (GPS) information), vehicle angle information, vehicle speed information, vehicle acceleration information, vehicle tilt information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position module, a vehicle forward/backward movement sensor, a wheel sensor, a vehicle speed sensor, a vehicle body tilt sensor, a battery sensor, a fuel sensor, a tire sensor, a steering wheel rotation sensor, an in-vehicle temperature sensor, an in-vehicle humidity sensor, etc. Meanwhile, the position module may include a GPS module to receive GPS information.

The interface 130 may receive front-of-vehicle image data, side-of-vehicle image data, rear-of-vehicle image data, and obstacle-around-vehicle distance information from a camera 195 or a LiDAR (not shown), and may transmit the received information to the signal processing device 170.

The camera 195 may further include an internal camera (not shown) to acquire an image inside the vehicle. Based on the image inside the vehicle, the processor 175 may detect a user's state. The processor 175 may obtain user's gaze information from the image inside the vehicle. The processor 175 may detect a user's gesture based on the image inside the vehicle.

The memory 140 may store various data necessary for the overall operation of the vehicle display apparatus 100, such as programs for processing or control of the signal processing device 170.

For example, the memory 140 may store data regarding a hypervisor, a server virtual machine (not shown), and a plurality of guest virtual machines executed in the processor 175.

The audio output device 185 may convert an electrical signal from the signal processing device 170 into an audio signal so as to output the audio signal. To this end, the audio output device 185 may include a speaker or the like.

The power supply 190 may supply power required for the operation of respective components, under the control of the signal processing device 170. In particular, the power supply 190 may receive power from a battery in the vehicle.

An HUD display 180h, which is the third display, may include the picture generation device 300 of FIG. 1 to project an image, and may output an augmented reality-based object under the control of the signal processing device 170.

For example, the HUD display 180h may output vehicle speed information, vehicle traveling direction information, a front vehicle object, a distance indicator showing a distance from a vehicle ahead, etc.

As another example, the HUD display 180h may output an augmented reality lane carpet corresponding to a lane image, an augmented reality route carpet, or an augmented reality dynamic carpet.

The signal processing device 170 may control the plurality of displays 180a, 180b, and 180h.

The signal processing device 170 may control the overall operation of each unit in the vehicle display apparatus 100.

For example, the signal processing device 170 may include a memory 508, and a processor 175 configured to perform signal processing for the displays 180a and 180b.

The processor 175 may execute a hypervisor (not shown), and may execute a server virtual machine (not shown) and a plurality of guest virtual machines (not shown) on the executed hypervisor.

In this case, the first guest virtual machine (not shown) may be operated for the first display 180a, and the second guest virtual machine (not shown) may be operated for the second display 180b or the third display 180h.

Meanwhile, the signal processing device 170 may process various signals, such as an audio signal, an image (or video) signal, and a data signal. To this end, the signal processing device 170 may be implemented in the form of a System-on-Chip (SoC).

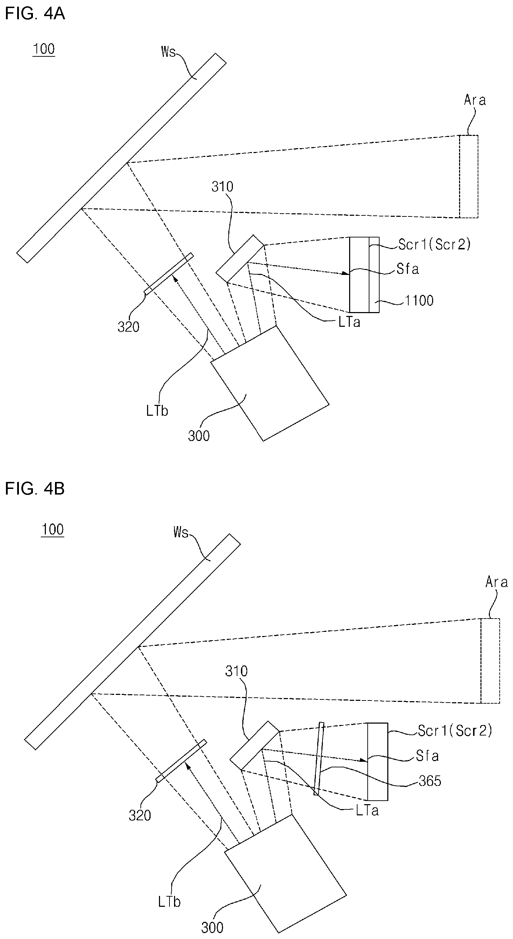

FIGS. 4A to 4C illustrates the internal configuration of a display apparatus for vehicle according to various embodiments of the present disclosure.

Referring to FIG. 4A, the vehicle display apparatus 100 according to an embodiment of the present disclosure may include a picture generation device 300 to output a projection image, an optical path separator 310 to reflect a first projection image LTa, which is a part of the projection image from the picture generation device 300, a screen Scr having one surface Sfa onto which the projection image from the optical path separator 310 is projected, a viewing angle adjustment panel 1100 to adjust a viewing angle for the screen Scr, and a signal processing device 170 to adjust a viewing angle of the viewing angle adjustment panel 1100.

The signal processing device 170 may output an electrical signal to control the viewing angle of the viewing angle adjustment panel 1100.

As a part of the first projection image LTa is projected on a part of the screen Scr, a cluster display may be achieved. Meanwhile, as another part of the first projection image LTa is projected on another part of the screen Scr, an AVN display may be achieved.

The picture generation device 300 may output a second projection image LTb onto a windshield WS. The second projection image LTb reflected from the windshield WS may be projected onto an area Ara, which is the driver's line of sight. Accordingly, a head-up display (HUD) may be achieved through the second projection image LTb.

Meanwhile, the vehicle display apparatus 100 of this embodiment may further include a diffusion member 320 disposed between the picture generation device 300 and the windshield WS, so as to diffuse the second projection image LTb, which is another part of the projection image. Accordingly, the second projection image LTb may be diffused and projected onto the windshield WS.

The diffusion member 320 and the screen Scr may each be made of a light transmissive (or transparent) material. In this case, preferably, the diffusion member 320 may have a light transmittance higher than a light transmittance of the screen Scr. Accordingly, the second projection image LTb may be diffused and projected onto the windshield WS. For example, when the picture generation device 300 projects a projection image, the first projection image LTa, which is a part of the projection image, passes through a first optical path, such as the optical path separator 310 and the screen Scr, and the second projection image LTb, which is another part of the projection image, passes through a second optical path, such as being reflected from the windshield WS.

As shown in FIG. 4A, by using the projection image projected by a single picture generation device 300, the plurality of displays 180a, 180b, and 180h may be implemented in an integrated manner, thereby achieving a compact vehicle display 100.

Alternatively, unlike shown in FIG. 4A, the optical path separator 310 may reflect the first projection image LTa, which is a part of the projection image from the picture generation device 300, and may transmit the second projection image LTb, which is another part of the projection image. To this end, the optical path separator 310 may include a polarization beam splitter.

Referring to FIG. 4B, the vehicle display apparatus 100 according to an embodiment of the present disclosure may include a picture generation device 300 to output a projection image, an optical path separator 310 to reflect a first projection image LTa, which is a part of the projection image, a screen Scr having one surface Sfa onto which the projection image from the optical path separator 310 is projected, and a focus variable unit 365 to change a focus of the projection image projected onto the screen Scr.

Thus, it is possible to adjust the focus of the projection image projected onto the screen Scr while implementing the plurality of displays in an integrated manner. In the present disclosure, it is illustrated and described that the focus variable unit 365 is disposed between the optical path separator 310 and the screen Scr.

The focus variable unit 365 may include a liquid lens that changes focus in response to an electrical signal. Thus, it is possible to adjust the focus of the projection image projected onto the screen Scr while implementing the plurality of displays in an integrated manner.

The focus variable unit 365 may include an electrochromic, liquid crystal or suspended particle material that adjusts focus in response to an electrical signal of the signal processing device 170.

Meanwhile, the vehicle display apparatus 100 of this embodiment may include the signal processing device 170 to control the focus variable unit 365. For example, the signal processing device 170 may output an electrical signal to control the focus variable unit 365.

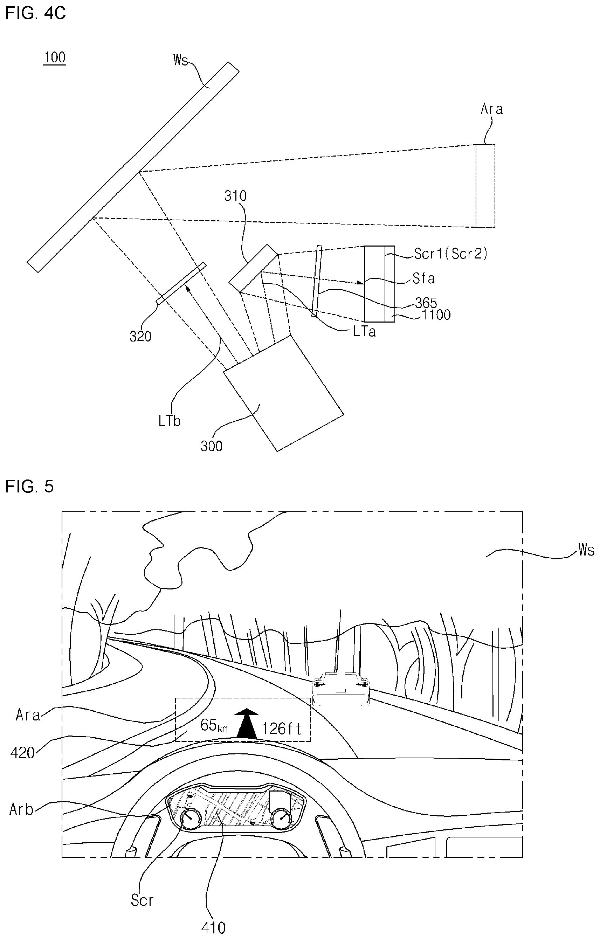

Referring to FIG. 4C, the vehicle display apparatus 100 according to an embodiment of the present disclosure may include a picture generation device 300 to output a projection image, an optical path separator 310 to reflect a first projection image LTa, which is a part of the projection image from the picture generation device 300, a screen Scr having one surface Sfa onto which the projection image from the optical path separator 310 is projected, a focus variable unit 365 to adjust a focus of the projection image projected onto the screen Scr, an angle adjustment panel 1100 to adjust a viewing angle for the screen Scr, and a signal processing device 170.

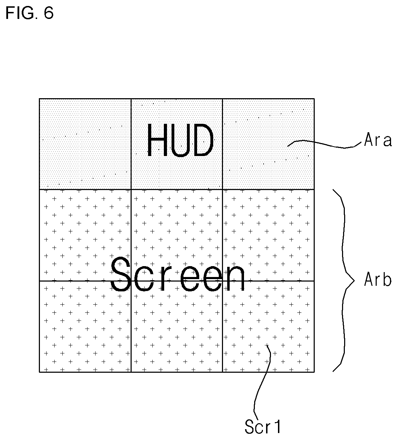

Referring to FIGS. 5 and 6, a cluster image 410 may be displayed on a first screen Scr1, which is the first display 180a. An HUD image 430 may be displayed in a predetermined area Ara of a windshield Ws.

As the area Ara where the HUD image is displayed and an area Arb where the first screen Scr1 is located can be displayed together, it is possible to implement the plurality of displays 180a and 180h in an integrated manner.

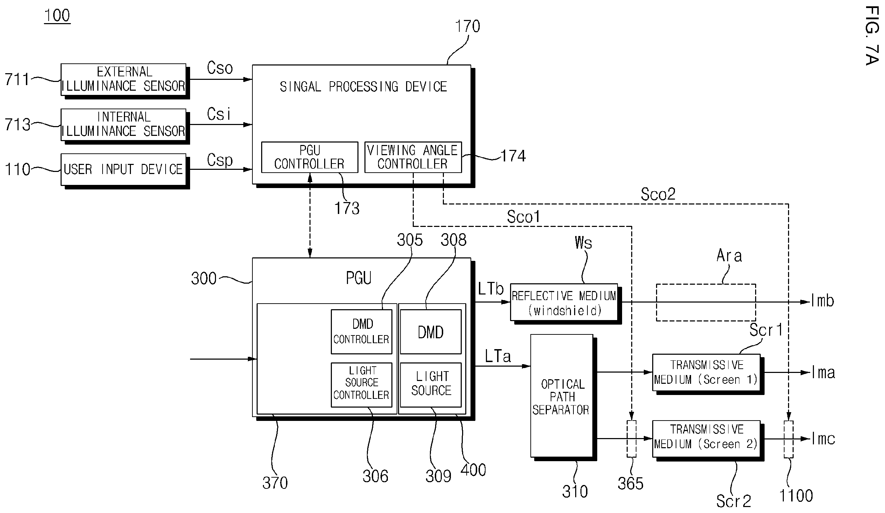

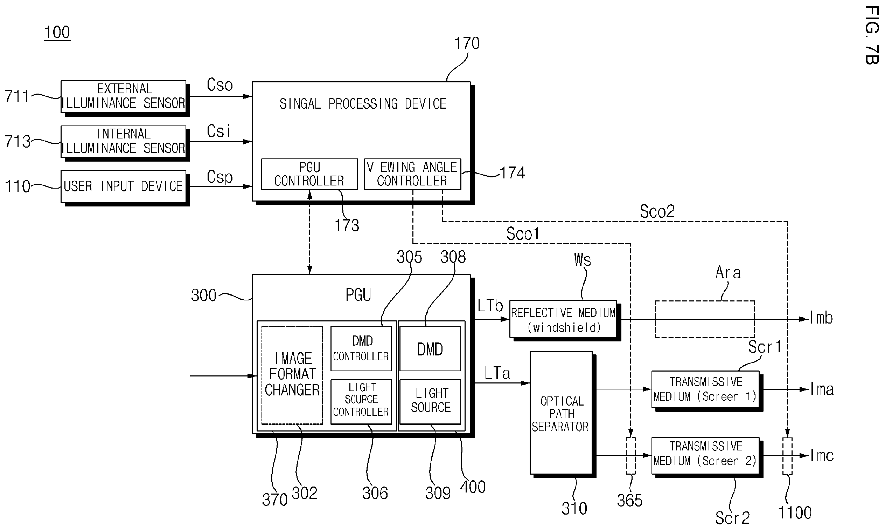

FIGS. 7A and 7B are internal block diagrams of a display apparatus for vehicle according to embodiments of the present disclosure.

Referring to FIG. 7A, the vehicle display apparatus 100 according to an embodiment of the present disclosure may include a signal processing device 170, a picture generation device 300, an optical path separator 310, a focus variable unit 365, a first screen Scr1, a second screen Scr2, a windshield WS, and/or a viewing angle adjustment panel 1100.

A first projection image LTa, which is a part of a projection image output by the picture generation device 300, may be reflected by the optical path separator 310. Therefore, the optical path separator 310 may also be referred to as a light reflector. A part of the projection image reflected by the optical path separator 310 may be projected onto the first screen Scr1, and another part of the projection image reflected by the optical path separator 310 may be projected onto the second screen Scr2. The first screen Scr1 and the second screen Scr2 may be included in the screen Scr.

A second projection image LTb, which is another part of the projection image output by the picture generation device 300, may be projected onto the windshield WS, and may be reflected by the windshield WS, which is a reflective medium.

The first screen Scr1 may correspond to the first display 180a. The second screen Scr2 may correspond to the second display 180b.

A part of the projection image reflected by the optical path separator 310 may be incident on the first screen Scr1, which is a transmissive medium, thereby displaying a cluster image Ima. Another part of the projection image reflected by the optical path separator 310 may be incident on the second screen Scr2, which is a transmissive medium, thereby displaying an AVN image Imc. Meanwhile, the second projection image LTb reflected by the windshield WS may be displayed as an HUD image Imb in a predetermined area Ara.

The focus variable unit 365 may be disposed between the optical path separator 310 and the second screen Scr2. The viewing angle adjustment panel 1100 may be disposed to correspond to the second screen Scr2.

Meanwhile, the focus variable unit 365 may be further disposed between the optical path separator 310 and the first screen Scr1. The viewing angle adjustment panel 1100 may be further disposed to correspond to the first screen Scr1.

The signal processing device 170 may control the focus variable unit 365.

For example, when the focus variable unit 365 includes a liquid lens having a refractive index that is variable according to an electrical signal, the signal processing device 170 may adjust the level or pulse width of a focus control signal Sco1 to change the focus of the liquid lens.

For example, when the focus variable unit 365 includes an electrochromic, liquid crystal or suspended particle material, the signal processing device 170 may adjust the level or pulse width of a focus control signal Sco1 to change the focus of the electrochromic, liquid crystal or suspended particle material.

The signal processing device 170 may control the viewing angle adjustment panel 1100. For example, the viewing angle adjustment panel 1100 may adjust the level or pulse width of a viewing angle control signal Sco2 to adjust the viewing angle for the screen Scr.

The vehicle display apparatus 100 may further include an external illuminance sensor 711, an internal illuminance sensor 713, and/or a user input device 110.

The picture generation device 300 may include a light output device 400 to output light. The light output device 400 may include a light source 308 and a digital mirror device 309 to reflect light emitted from the light source 308. For example, the light source 308 may include an LED diode, a laser diode, etc.

The digital mirror device 309 may include a plurality of digital mirrors. For example, the digital mirror device 309 may include a digital micromirror device (DMD).

The picture generation device 300 may further include a digital mirror controller 305 for controlling the digital mirror device 309, and a light source controller 306 for controlling the light source 308. The picture generation device 300 may include a processor 370, and the processor 370 may include the digital mirror controller 305 for controlling the digital mirror device 309 and the light source controller 306 for controlling the light source 308.

The signal processing device 170 may include a picture generation controller 173 for controlling the picture generation device 300, and a viewing angle controller 174. The picture generation controller 173 and the viewing angle controller 174 may be provided in a processor 175 of the signal processing device 170.

Meanwhile, in order to reduce a difference in luminance between the first projection image LTa projected onto the screen Scr and the second projection image LTb reflected on the windshield WS, the signal processing device 170 may control, for each frame, the luminance of the first projection image LTa output by the light output device 400 to be less than the luminance of the second projection image LTb output by the light output device 400.

For example, the signal processing device 170 may control an area of the digital mirror device 309 that corresponds to the first projection image LTa to be off during a first period.

In this case, the signal processing device 170 may control an area of the digital mirror device 309 that corresponds to the second projection image LTb to be switched on or off during the first period.

In other words, during the first period, the signal processing device 170 may control the digital mirror device 309 so that the number of off-states or the turn-off frequency is greater in the area corresponding to the first projection image LTa than in the area corresponding to the second projection image LTb. This allows the luminance of the first projection image LTa output by the light output device 400 to be lower than the luminance of the second projection image LTb output by the light output device 400.

As another example, during the first period, the signal processing device 170 may control such that a light source corresponding to the first projection image LTa is at least partially off and a light source corresponding to the second projection image LTb is switched on or off.

In other words, during the first period, the signal processing device 170 may control the light source 308 so that the number of off-states or the turn-off frequency of the light source corresponding to the first projection image LTa is greater than that of the light source corresponding to the second projection image LTb. This allows the luminance of the first projection image LTa output by the light output device 400 to be lower than the luminance of the second projection image LTb output by the light output device 400.

Meanwhile, based on external illuminance Cso from the external illuminance sensor 711, internal illuminance Csi from the internal illuminance sensor 713, or a setting input Csp from the user input device 110, the signal processing device 170 may control the operation of the digital mirror device 309 or the light source 308.

For example, in response to an increase in the external illumination Cso, the signal processing device 170 may control, for each frame, luminance of the first projection image LTa output by the light output device 400 to be less than luminance of the second projection image LTb output by the light output device 400.

As another example, in response to a decrease in the internal illumination Csi, the signal processing device 170 may control, for each frame, luminance of the first projection image LTa output by the light output device 400 to be less than luminance of the second projection image LTb output by the light output device 400.

As another example, in response to a decrease in the setting input Csp, the signal processing device 170 may control, for each frame, luminance of the first projection image LTa output by the light output device 400 to be less than luminance of the second projection image LTb output by the light output device 400.

Thus, it is possible to reduce the luminance difference between the first projection image LTa projected onto the screen Scr and the second projection image LTb reflected on the windshield WS.

Referring to FIG. 7B, a vehicle display apparatus 100b according to an embodiment of the present disclosure is similar to the vehicle display apparatus 100 of FIG. 7A, but differs in that an image format changer 302 is further provided in a picture generation device 300b. The difference will be mainly described below.

The picture generation device 300b outputs a projection image based on an input image from an external input or an input image from the signal processing device 170.

Here, the image format changer 302 in the picture generation device 300b may change an image format of the input image from the external input or the input image from the signal processing device 170.

For example, when the frame rate of an input image is a first frame rate, the picture generation device 300b may change the frame rate to a second frame rate.

More specifically, when the frame rate of the input image is 60 Hz, the picture generation device 300b may increase and change the frame rate to 120 Hz.

Meanwhile, the image format changer 302 may be provided in the processor 370.

Meanwhile, in a first mode, the signal processing device 170 may control the light output device 400 to output a first projection image LTa and a second projection image LTb at the first frame rate.

In a second mode after the first mode, the signal processing device 170 may control the light output device 400 to output the first projection image LTa and the second projection image LTb at the second frame rate, which is greater than the first frame rate. In this case, the signal processing device 170 may control luminance of the first projection image LTa to be less than luminance of the second projection image LTb.

Thus, it is possible to reduce the luminance difference between the first projection image LTa projected onto the screen Scr and the second projection image LTb reflected on the windshield WS while implementing the plurality of displays 180a and 180h in an integrated manner.

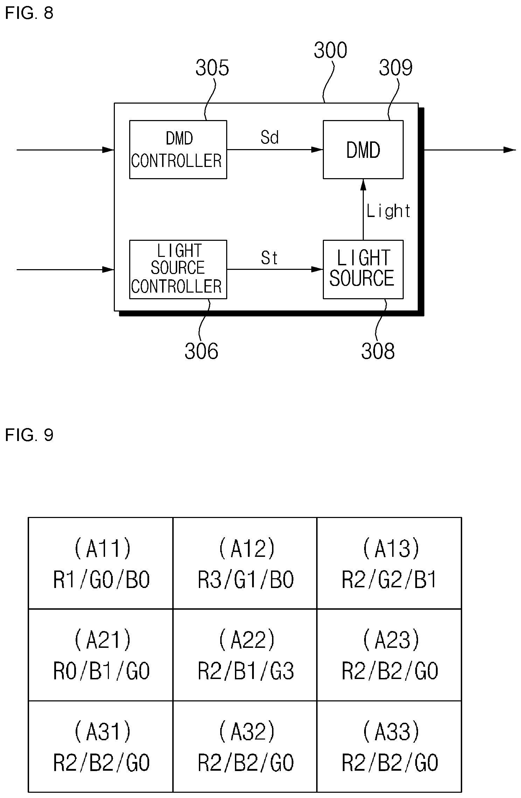

FIGS. 8 to 10 are reference diagrams for explaining the operation of a picture generation device according to an embodiment of the present disclosure.

Referring to FIG. 8, the digital mirror controller 305 in the picture generation device 300 may output a control signal Sd to control the digital mirror device 309. The light source controller 306 may output a control signal St to control the light source 308.

Meanwhile, the luminance of a projection image output by the picture generation device 300 may be determined based on luminance of the light source, an on-time ratio of the light source, an on-time ratio of the digital mirror device 309, a light reflectance of the digital mirror device 309, etc.

Referring to FIG. 9, the digital mirror device 309 may include a plurality of digital mirrors (A11 ~ A33) in a matrix form. In the present disclosure, for ease of description, digital mirrors in a 3*3 matrix form are shown as an example, but the present disclosure is not limited thereto. Meanwhile, R, G, and B light sources may be disposed in each digital mirror.

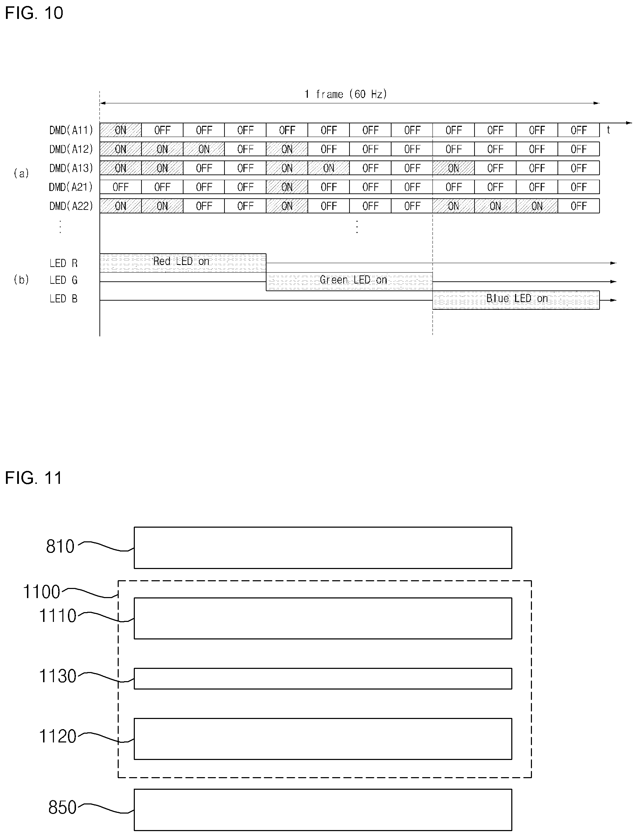

Referring to FIG. 10, the picture generation device 300 may output a projection image according to the first frame rate (e.g., 60 Hz). The R, G, and B light sources disposed in each digital mirror may be operated, as shown in (b) of FIG. 10, and the plurality of digital mirrors (A11 ~ A33) may be on or off, as shown in (a) of FIG. 10.

Meanwhile, in the present disclosure, it is illustrated and described that the picture generation device 300 includes the digital mirror controller 305 and the digital merroir device 309, but the present disclosure is not limited thereto. For example, the picture generation device 300 may include a display panel and a panel drive unit. The display panel may include a first substrate on which a driving element, such as a thin-film transistor (TFT), and a pixel electrode connected thereto are provided, a second substrate on which a common electrode is provided, and/or a liquid crystal layer formed between the first substrate and the second substrate. The arrangement of liquid crystal molecules in the display panel may be of an IPS (in-plane switching) type. The panel drive unit may drive the display panel based on a control signal and/or a data signal transmitted from the signal processing device 170. The panel drive unit may include a timing controller, a gate driver, and/or a data driver.

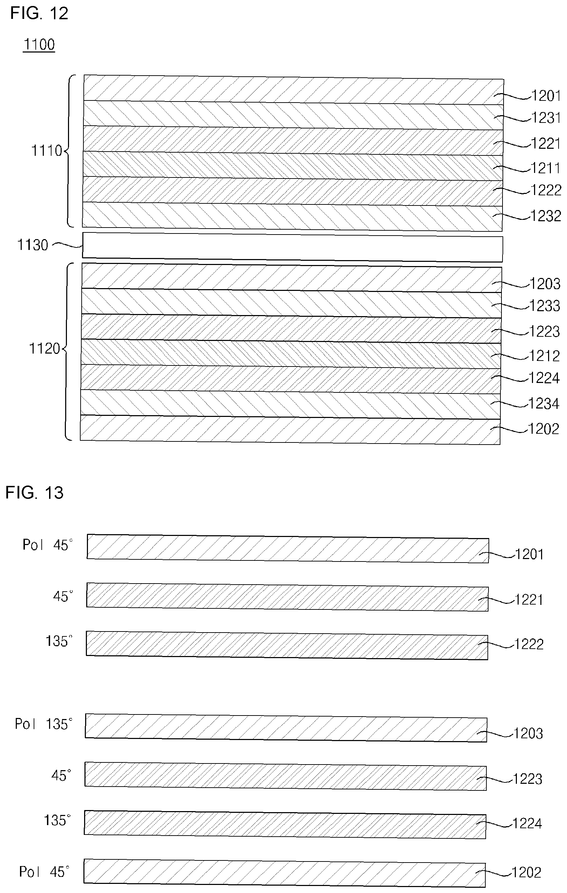

FIGS. 11 to 28 are reference diagrams for explaining the operation of adjusting a viewing angle of a display apparatus for vehicle according to various embodiments of the present disclosure.

Referring to FIGS. 11 to 13, the vehicle display apparatus 100 may include a viewing angle adjustment panel 1100. The viewing angle adjustment panel 1100 may be disposed between a protective film 810 exposed to the inside of the vehicle and a screen 850.

The viewing angle adjustment panel 1100 may adjust a viewing angle for the screen 850. Here, the viewing angle may refer to a range of angles at which a user can view an image with a certain image quality or higher, when the user looks at the screen 850. The viewing angle adjustment panel 1100 may adjust the viewing angle under the control of the viewing angle controller 174.

The viewing angle adjustment panel 1100 may include a first adjustment unit 1110, a second adjustment unit 1120, and/or a film 1130. The film 1130 may be configured to limit emission of light at a predetermined angle. In one embodiment, the film 1130 may be disposed between the first adjustment unit 1110 and the second adjustment unit 1120, but the present disclosure is not limited thereto. For example, the film 1130 may be disposed over the first adjustment unit 1110, under the second adjustment unit 1120, etc.

The first adjustment unit 1110 and the second adjustment unit 1120 may each include a liquid crystal layer 1211, 1212 composed of liquid crystal molecules. The first adjustment unit 1110 and the second adjustment unit 1120 may each include a plurality of alignment layers that define the arrangement of the liquid crystal molecules included in the liquid crystal layer 1211, 1212. The orientation of the liquid crystal molecules included in the liquid crystal layer 1211, 1212 may be defined by the property of the liquid crystal molecules and the pattern of the plurality of alignment layers.

The first adjustment unit 1110 may include a first upper alignment layer 1221 disposed over a first liquid crystal layer 1211, and a first lower alignment layer 1222 disposed under the first liquid crystal layer 1211. For example, the direction in which the liquid crystal molecules are aligned by the first upper alignment layer 1221 and the direction in which the liquid crystal molecules are aligned by the first lower alignment layer 1222 may be perpendicular to each other. The second adjustment unit 1120 may include a second upper alignment layer 1223 disposed over a second liquid crystal layer 1212, and a second lower alignment layer 1224 disposed under the second liquid crystal layer 1212. For example, the direction in which the liquid crystal molecules are aligned by the second upper alignment layer 1223 and the direction in which the liquid crystal molecules are aligned by the second lower alignment layer 1224 may be perpendicular to each other.

The first adjustment unit 1110 and the second adjustment unit 1120 may each include a plurality of substrates on which electrodes are formed. The electrode may be formed of a metal oxide such as Indium Tin Oxide (ITO) or Indium Zinc Oxide (IZO), but is not limited thereto. The first adjustment unit 1110 may include a first upper substrate 1231 disposed above the first liquid crystal layer 1211 and a first lower substrate 1232 disposed below the first liquid crystal layer 1211. The second adjustment unit 1120 may include a second upper substrate 1233 disposed above the second liquid crystal layer 1212 and a second lower substrate 1234 disposed below the second liquid crystal layer 1212.

The viewing angle controller 174 may adjust the viewing angle by controlling the alignment of the liquid crystal molecules included in the liquid crystal layer 1211, 1212. The viewing angle may vary depending on the extent to which the arrangement of the liquid crystal molecules included in the liquid crystal layer 1211, 1212 is changed. In one embodiment, the liquid crystal alignment mode may be a twisted nematic (TN) mode, but the present disclosure is not limited thereto. For example, the liquid crystal alignment mode may include a super-twisted nematic (STN) mode, a vertically aligned nematic (VAN) mode, a twisted vertically aligned nematic (TVAN) mode, a hybrid aligned nematic (HAN) mode, etc.

The viewing angle controller 174 may control voltage applied to the electrodes of the plurality of substrates. A difference between voltages applied to the electrodes of the plurality of substrates (hereinafter referred to as a "voltage difference") may cause a change in the arrangement of the liquid crystal molecules included in the liquid crystal layer 1211, 1212. For example, according to the voltage difference between a first electrode of the first upper substrate 1231 and a second electrode of the first lower substrate 1232 that corresponds to the first electrode, the arrangement of liquid crystal molecules corresponding to the first electrode and the second electrode may be changed.

In one embodiment, as the voltage difference between the electrode of the first upper substrate 1231 and the electrode of the first lower substrate 1232 increases, the extent to which the arrangement of the liquid crystal molecules included in the first liquid crystal layer 1211 is changed may increase. In this case, the greater the extent to which the arrangement of the liquid crystal molecules included in the liquid crystal layer 1211, 1212 is changed, the lower the viewing angle. For example, when the voltage difference between the electrode of the first upper substrate 1231 and the electrode of the first lower substrate 1232 is a preset minimum value of 0V, light may be emitted intactly through the liquid crystal layer 1211, 1212. For example, when the voltage difference between the electrode of the first upper substrate 1231 and the electrode of the first lower substrate 1232 is a preset maximum value of 4V or higher, light may be blocked by the liquid crystal layer 1211, 1212.

The viewing angle adjustment panel 1100 may include a plurality of polarizers. In one embodiment, the viewing angle adjustment panel 1100 may include a first polarizer 1201 disposed at the top, a second polarizer 1202 disposed at the bottom, and/or a third polarizer 1203 disposed between the plurality of liquid crystal layers 1211 and 1212. For example, the first polarizer 1201 may be disposed at the top of the first adjustment unit 1110, and the second polarizer 1202 and the third polarizer 1203 may be disposed at the bottom and the top of the second adjustment unit 1120, respectively. In one embodiment, a polarization axis of the first polarizer 1201 and a polarization axis of the second polarizer 1202 may be parallel to each other. A polarization axis of the third polarizer 1203 may be perpendicular to the polarization axis of the first polarizer 1201 and the polarization axis of the second polarizer 1202.

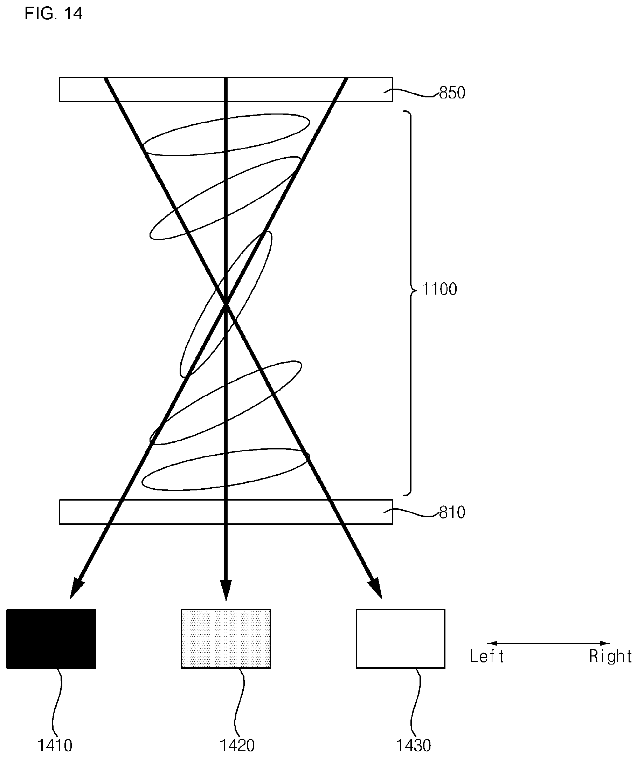

Referring to FIG. 14, light output from the screen 850 may pass through the viewing angle adjustment panel 1100 and then be emitted through the protective film 810. In this case, when the arrangement of liquid crystal molecules included in the viewing angle adjustment panel 1100 is changed, the luminance of an image output through the vehicle display apparatus 100 may vary depending on the angle at which a user views the screen 850.

In one embodiment, when a user looks at the screen 850 from the left with respect to an overall length direction, the luminance of the screen viewed by the user may be relatively low (see 1410) as compared to when viewed from the front or right. In addition, the luminance of the screen viewed by the user may gradually increase from left to right (see 1420 and 1430).

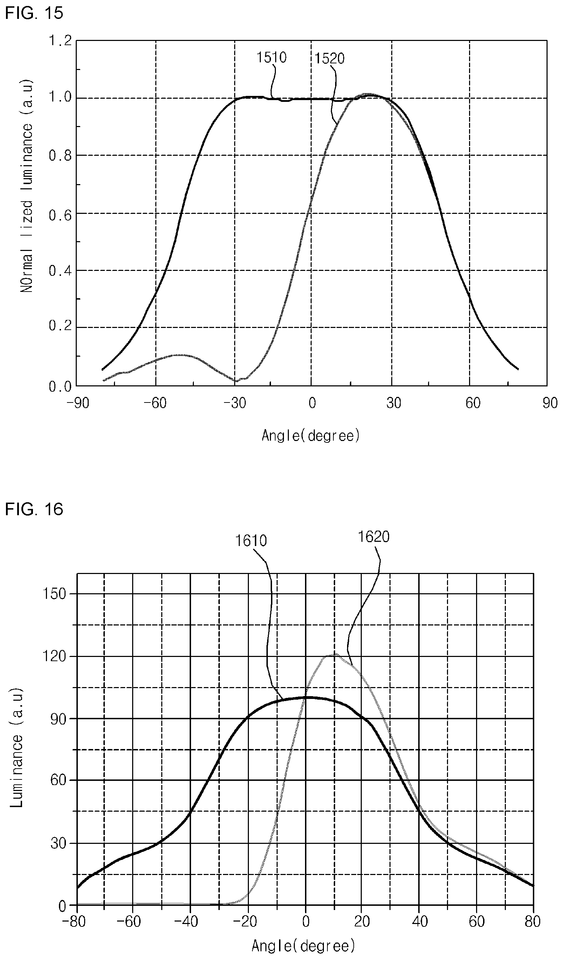

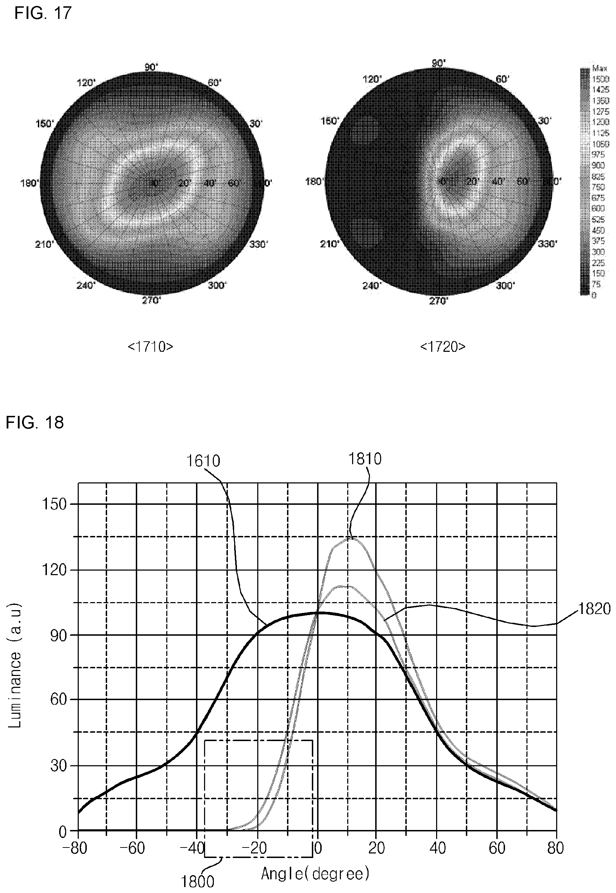

FIG. 15 is a reference diagram for explaining a case in which the film 1130 is not included in the viewing angle adjustment panel 1100, according to an embodiment of the present disclosure. FIGS. 16 and 17 are reference diagrams for explaining a case in which the film 1130 is included in the viewing angle adjustment panel 1100, according to an embodiment of the present disclosure.

Although the present disclosure is described based on an example in which a driver seat is located on the left and a passenger seat (front passenger seat) is located on the right with respect to the overall length direction, the present disclosure is not limited thereto. For example, the present disclosure is applicable to an embodiment in which a driver seat is located on the right and a passenger seat is located on the left or an embodiment in which a driver seat is located in the middle and passenger seats are located on both sides, with respect to the overall length direction.

Referring to FIG. 15, the viewing angle of the screen 850 may be determined depending on whether or not a predetermined mode for adjusting the viewing angle through the viewing angle adjustment panel 1100 is set. When the predetermined mode is set, the arrangement of liquid crystal molecules included in the viewing angle adjustment panel 1100 may be changed to adjust the viewing angle. Accordingly, the luminance level of an image output through one area of the screen 850 may be different when the predetermined mode is not set and when the predetermined mode is set, namely, a luminance level 1510 when the predetermined mode is not set and a luminance level 1520 when the predetermined mode is set.

Based on the comparison of the luminance level 1510 when the predetermined mode is not set and the luminance level 1520 when the predetermined mode is set, a user can view the image output through the one area of the screen 850 from a wider range of angles without distortion when the predetermined mode is not set. Based on the luminance level 1510 when the predetermined mode is not set, the user can view the image without distortion while maintaining the viewing angle of the one area of the screen 850 at -30° to 30°. Meanwhile, when the angle at which the user views the one area of the screen 850 is less than -30° or greater than 30°, the luminance of the screen that the user views through the one area of the screen 850 may decrease. That is, even when the predetermined mode is not set, the viewing angle may be limited by the viewing angle adjustment panel 1100 disposed between screen 850 and the protective film 810.

Based on the luminance level 1520 when the predetermined mode is set, when the angle at which the user views the one area of the screen 850 is less than 0°, the luminance of the screen that the user views through the one area of the screen 850 may decrease. That is, when the predetermined mode is set, as the user moves to the left where the driver seat is located, the luminance of the screen that the user views through the one area of the screen 850 may decrease.

In addition, when the angle between the user and the one area of the screen 850 is -30°, the luminance of the screen that the user views through the one area of the screen 850 may be at its minimum value. However, when the angle between the user and the one area of the screen 850 is less than -30°, the luminance of the screen viewed through the one area of the screen 850 may increase again.

Referring to FIGS. 16 and 17, when the viewing angle adjustment panel 1100 includes the film 1130, if the angle at which a user views one area of the screen 850 is less than 0°, the luminance of the screen that the user views through the one area of the screen 850 may decrease. However, as for the case when the predetermined mode is not set (see 1610 and 1710), it exhibits a wider range of viewing angles, compared to the case when the predetermined mode is set (see 1620 and 1720).

When the predetermined mode is set (see 1620 and 1720), if the angle between the user and the one area of the screen 850 is -25°, the luminance of the screen that the user views through the one area of the screen 850 may be at its minimum value. In this case, as the emission of light is limited by the film 1130, the luminance of the screen that the user views through the one area of the screen 850 may be at the minimum value even when the angle between the user and the one area of the screen 850 is less than -25°. Therefore, when the angle between the one area of the screen 850 and the driver seat is less than -25°, the user located in the driver seat may be blocked from watching the image output through the one area of the screen 850.

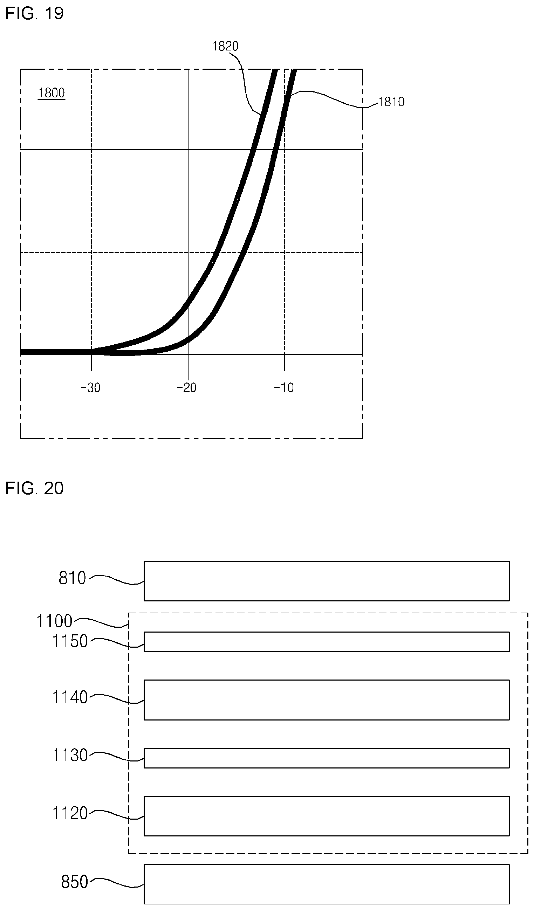

Referring to FIGS. 18 and 19, when the voltage difference between the electrodes is a first voltage (e.g., 2.43V) (see 1810), if the angle between a user and one area of the screen 850 is less than -23°, the luminance of the screen that the user views through the one area of the screen 850 may be at its minimum value. By contrast, when the voltage difference between the electrodes is a first voltage (e.g., 2.35V) (see 1820), if the angle between a user and one area of the screen 850 is less than -28°, the luminance of the screen that the user views through the one area of the screen 850 may be at its minimum value.

That is, the vehicle display apparatus 100 may change the viewing angle by adjusting the voltage difference between the electrodes of the plurality of substrates. In addition, as the voltage difference between the electrodes of the plurality of substrates increases, the viewing angle for the screen 850 may decrease.

The vehicle display apparatus 100 may adjust a viewing angle for the screen 850 based on the position of a user located in the driver seat (hereinafter referred to as a "driver"). For example, the vehicle display apparatus 100 may set the voltage difference between the electrodes to 2.35V when the angle between the driver and one area of the screen 850 is -28°. In this case, when the angle between the driver and the one area of the screen 810 becomes -23° as the driver moves to the right, the vehicle display apparatus 100 may change the voltage difference between the electrodes to 2.43V. Thus, even when there is a change in the driver's position, it is possible to block the driver from watching the image output through the one area of the screen 850.

FIGS. 20 to 23 are reference diagrams for explaining a display apparatus for vehicle according to an embodiment of the present disclosure. A detailed description similar or equal to the description of FIGS. 11 to 19 will be omitted.

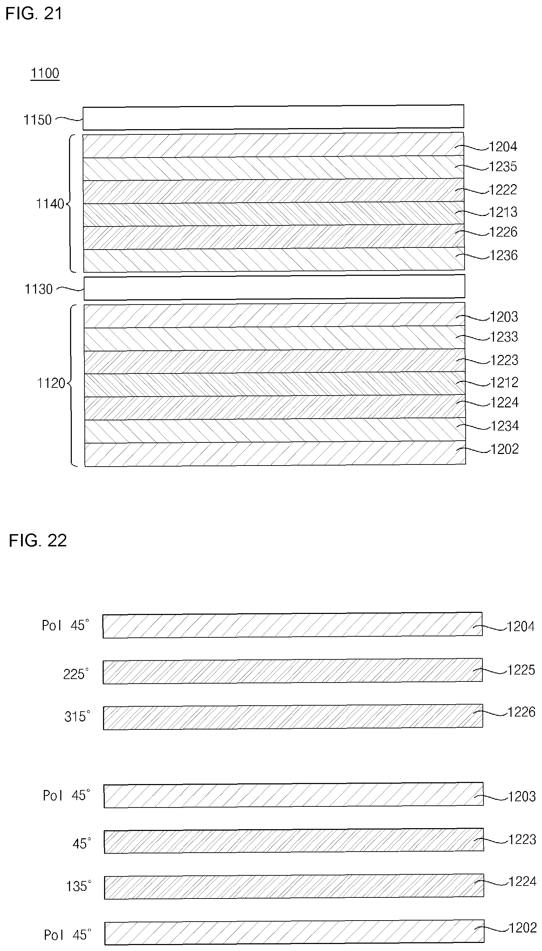

Referring to FIGS. 20 and 21, the viewing angle adjustment panel 1100 may include a second adjustment unit 1120 and a third adjustment unit 1140.

The third adjustment unit 1140 may correspond to the first adjustment unit 1110 rotated by 180° with respect to a rotation axis parallel to the vertical direction in which the components of the viewing angle adjustment panel 1100 are stacked.

The third adjustment unit 1140 may include a third liquid crystal layer 1213 composed of liquid crystal molecules. The third adjustment unit 1140 may include a third upper alignment layer 1225 disposed over the third liquid crystal layer 1213 and a third lower alignment layer 1226 disposed under the third liquid crystal layer 1213. The orientation of the liquid crystal molecules included in the third liquid crystal layer 1213 may be defined by the property of the liquid crystal molecules and the pattern of the plurality of third alignment layers 1225 and 1226.

The direction in which the liquid crystal molecules are aligned by the third upper alignment layer 1225 and the direction in which the liquid crystal molecules are aligned by the third lower alignment layer 1226 may be perpendicular to each other. The direction in which the liquid crystal molecules are aligned by the third upper alignment layer 1225 may be opposite to the direction in which the liquid crystal molecules are aligned by the first upper alignment layer 1221. The direction in which the liquid crystal molecules are aligned by the third lower alignment layer 1226 may be opposite to the direction in which the liquid crystal molecules are aligned by the first lower alignment layer 1222.

The third adjustment unit 1140 may include a third upper substrate 1235 disposed above the third liquid crystal layer 1213, and a third lower substrate 1236 disposed below the third liquid crystal layer 1213. The arrangement of the liquid crystal molecules included in the third liquid crystal layer 1213 may be changed according to the voltage difference between electrodes of the plurality of third substrates 1235 and 1236.

As the voltage difference between the electrode of the third upper substrate 1235 and the electrode of the third lower substrate 1236 increases, the extent to which the arrangement of the liquid crystal molecules included in the third liquid crystal layer 1213 is changed may increase. In this case, the greater the extent to which the arrangement of the liquid crystal molecules included in the third liquid crystal layer 1213 is changed, the lower the viewing angle. For example, as the arrangement of the liquid crystal molecules constituting the first liquid crystal layer 1211 of the first adjustment unit 1110 is changed, emission of light toward the driver seat may be restricted. For example, as the arrangement of the liquid crystal molecules constituting the third liquid crystal layer 1213 of the third adjustment unit 1130 is changed, emission of light toward the passenger seat may be restricted.

In one embodiment, the viewing angle adjustment panel 1100 may include a plurality of films 1130 and 1150.

A first film 1130 may be disposed above the second adjustment unit 1120. The first film 1130 may be configured to limit emission of light at a first angle corresponding to the second adjustment unit 1120. For example, when the emission of light toward the driver seat is restricted as the arrangement of the liquid crystal molecules constituting the second liquid crystal layer 1212 of the second adjustment unit 1120 is changed, the first film 1130 may be configured to limit light at a predetermined angle from emitting toward the driver seat.

The second film 1150 may be disposed above the third adjustment unit 1130. The second film 1150 may be configured to limit emission of light at a second angle corresponding to the third adjustment unit 1140. For example, when the emission of light toward the passenger seat is restricted as the arrangement of the liquid crystal molecules constituting the third liquid crystal layer 1213 of the third adjustment unit 1140 is changed, the second film 1150 may be configured to limit light at a predetermined angle from emitting toward the passenger seat.

In the present disclosure, it is described that the viewing angle adjustment panel 1100 includes the third adjustment unit 1140 corresponding to the first adjustment unit 1110, but the present disclosure is not limited thereto.

In one embodiment, the viewing angle adjustment panel 1100 may include a first adjustment unit 1110 and a fourth adjustment unit corresponding to the second adjustment unit 1120. In this case, the fourth adjustment unit may correspond to the second adjustment unit 1120 rotated by 180° with respect to a rotation axis parallel to the vertical direction in which the components of the viewing angle adjustment panel 1100 are stacked. For example, the vehicle display apparatus 100 may restrict emission of light toward the driver seat through the first adjustment unit 1110, and may restrict emission of light toward the passenger seat through the fourth adjustment unit.

In one embodiment, the vehicle display apparatus 100 may include a plurality of viewing angle adjustment panels. The plurality of viewing angle adjustment panels may be stacked and arranged along the vertical direction. One of the plurality of viewing angle adjustment panels may correspond to the viewing angle adjustment panel 1100 illustrated in FIGS. 11 to 13. A remaining one of the plurality of viewing angle adjustment panels may correspond to the viewing angle adjustment panel 1100 rotated by 180° with respect to a rotation axis parallel to the vertical direction. For example, the vehicle display apparatus 100 may restrict emission of light toward the driver seat through one of the plurality of viewing angle adjustment panels, and may restrict emission of light toward the passenger seat through a remaining one of the plurality of viewing angle adjustment panels.

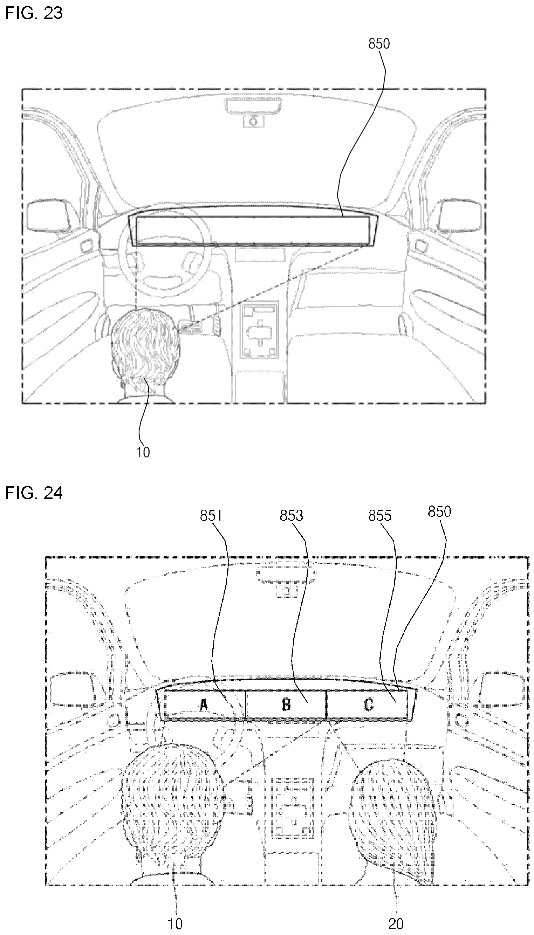

Referring to FIGS. 23 and 24, the screen 850 corresponding to an instrument panel (or dashboard) may be disposed in front of a driver 10 and/or a user 20 in the passenger seat (hereinafter referred to as a "passenger"). The driver 10 can gaze at the entire area of the screen 850.

The screen 810 may include a first area 851 corresponding to the driver 10, a second area 853 corresponding to the driver 10 and the passenger 20, and/or a third area 855 corresponding to the passenger 20. In the present disclosure, the screen 850 consisting of three areas 851, 853, 855 is shown as an example, but the present disclosure is not limited thereto.

The vehicle display apparatus 100 may output an image through at least one area of the screen 850. For example, the vehicle display apparatus 100 may output, through the first area 851, an instrument panel screen containing driving (or traveling) speed, driving distance, etc. For example, the vehicle display apparatus 100 may output, through the second area 853, a control screen for controlling devices in the vehicle 200 such as a lamp device and an air conditioner, a screen containing navigation information, etc. For example, the vehicle display apparatus 100 may output, through the third area 855, video content such as a movie, a game, etc.

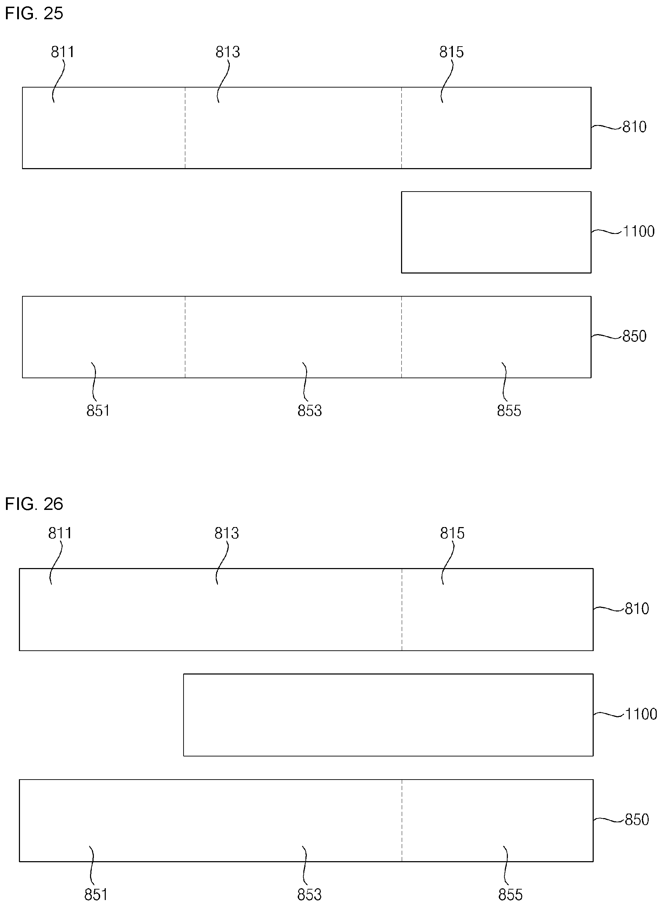

Referring to FIGS. 25 to 27, the viewing angle adjustment panel 1100 may be disposed to correspond to at least a part of the plurality of areas of the screen 850.

Meanwhile, the protective film 810 may be disposed to correspond to each of the plurality of areas of the screen 850. For example, the protective film 810 may include a first protective film 811 corresponding to the first area 851, a second first protective film 813 corresponding to the second area 853, and/or a third protective film 815 corresponding to the third area 855. Alternatively, two or more areas of the plurality of areas of the screen 850 may correspond to one protective film.

Meanwhile, the focus variable unit 365 may be disposed to correspond to each of the plurality of areas of the screen 850. For example, the focus variable unit 365 may include a first liquid lens corresponding to the first area 851, a second liquid lens corresponding to the second area 853, and/or a third liquid lens corresponding to the third area 855. Alternatively, two or more areas of the plurality of areas of the screen 850 may correspond to one liquid lens.

Referring to FIG. 25, the viewing angle adjustment panel 1100 may be disposed to correspond to the third area 855 of the screen 850. When the arrangement of the liquid crystal molecules included in the viewing angle adjustment panel 1100 is changed, the viewing angle for at least a part of the third area 855 may be adjusted. For example, when a predetermined mode is set, the vehicle display apparatus 100 may adjust the viewing angle for the entire third area 855. In this case, a restricted area may correspond to the entire third area 855.

Referring to FIG. 26, the viewing angle adjustment panel 1100 may be disposed to correspond to the second area 853 and the third area 855 of the screen 850. When the arrangement of the liquid crystal molecules included in the viewing angle adjustment panel 1100 is changed, the viewing angle for at least in part, namely, one of the second area 853 and the third area 855 may be adjusted. For example, when a predetermined mode is set, the vehicle display apparatus 100 may adjust the viewing angle for the third area 855, between the second area 853 and the third area 855.

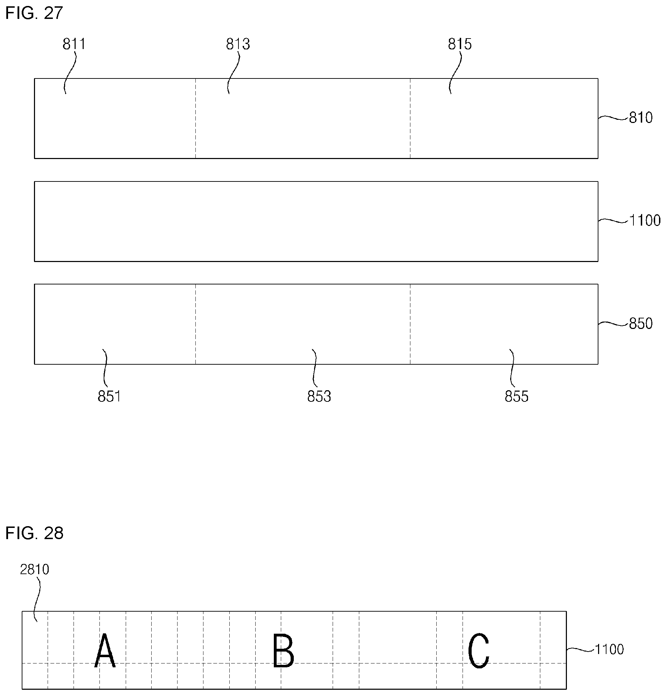

Referring to FIG. 27, the viewing angle adjustment panel 1100 may be disposed to correspond to the first area 851, the second area 853, and the third area 855 of the screen 850. When the arrangement of the liquid crystal molecules included in the viewing angle adjustment panel 1100 corresponding to the first area 851 is changed, light emitted toward the passenger seat (passenger side) through the first area 851 may be blocked. When the arrangement of the liquid crystal molecules included in the viewing angle adjustment panel 1100 corresponding to the second area 853 and the third area 855 is changed, light emitted toward the driver seat (driver side) through, at least in part, namely, one of the second area 853 and the third area 855 may be blocked.

Referring to 28, the viewing angle adjustment panel 1100 may include a plurality of sub-units 2850 to independently control the arrangement of liquid crystal molecules. The plurality of sub-units 2850 may be disposed side by side in an area where the viewing angle adjustment panel 1100 is disposed. The plurality of sub-units 2850 may be disposed to correspond to each area of the screen 850.

The vehicle display apparatus 285 may apply a predetermined voltage to the sub-unit 2850 so as to change the arrangement of liquid crystal molecules included in the sub-unit 2850. In this case, as the voltage applied to the sub-unit 2850 increases, the voltage difference between the electrodes of a plurality of substrates included in the sub-unit 2850 may increase. For example, when the third area 855 corresponds to a restricted area, the vehicle display apparatus 285 may apply a predetermined voltage to the sub-unit 2850 corresponding to the third area 855, so that the arrangement of the liquid crystal molecules included in the sub-unit 2850 corresponding to the third area 855 is changed. For example, when the second area 853 and the third area 855 correspond to a restricted area, the vehicle display apparatus 285 may apply a first voltage to the sub-unit 2850 corresponding to the second area 853, and may apply a second voltage lower than the first voltage to the sub-unit 2850 corresponding to the third area 855.

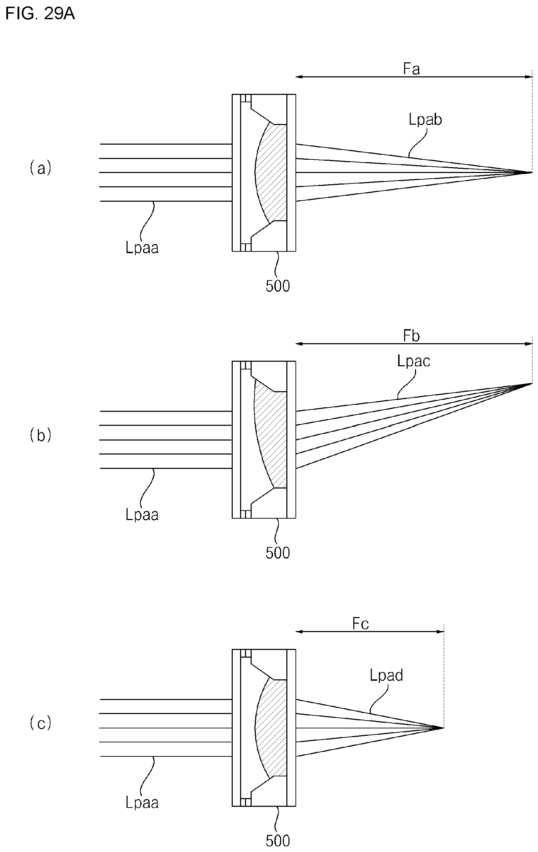

FIGS. 29A to 29D are reference diagrams for explaining a focus variable unit of a display apparatus for vehicle according to an embodiment of the present disclosure.

of FIG. 29A illustrates that a liquid lens 500 operates as a concave lens as the liquid in the liquid lens 500 has a constant curvature. That is, according to (a) of FIG. 29A, incident light Lpaa is converged, and corresponding output light Lpab is output. In this case, the focal length may be Fa.

of FIG. 29A illustrates that the direction of light propagation is changed upward as the liquid in the liquid lens 500 has an asymmetric curved surface. That is, according to (b) of FIG. 29A, incident light Lpaa is converged upward, and corresponding output light Lpac is output. Meanwhile, as the liquid in the liquid lens 500 has the asymmetric curved surface, the direction of light propagation may be changed to the left or right.

of FIG. 29A illustrates that the focal length of light is Fc, which is less than the focal length Fa of (a) of FIG. 29A, as the asymmetric curved surface of the liquid in the liquid lens 500 changes.

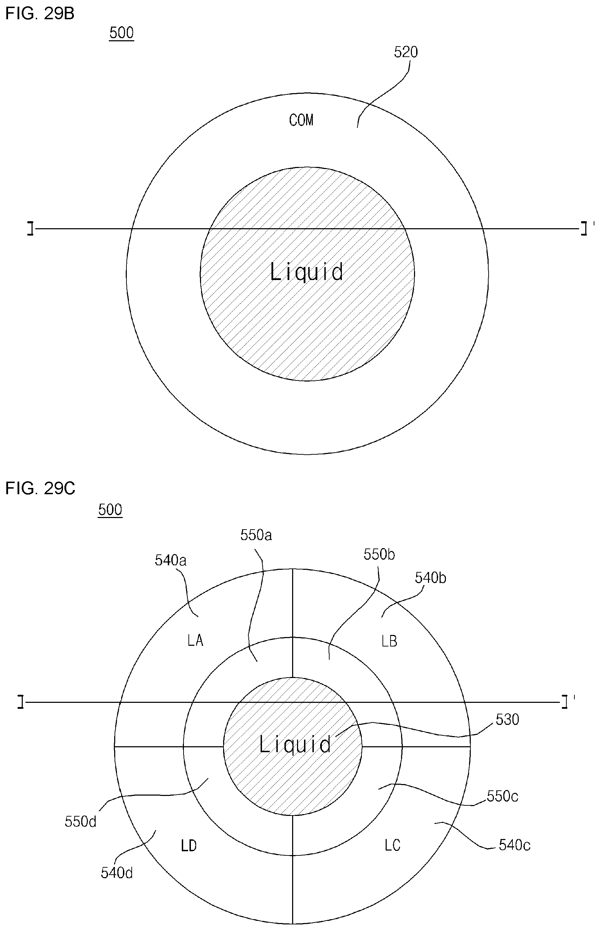

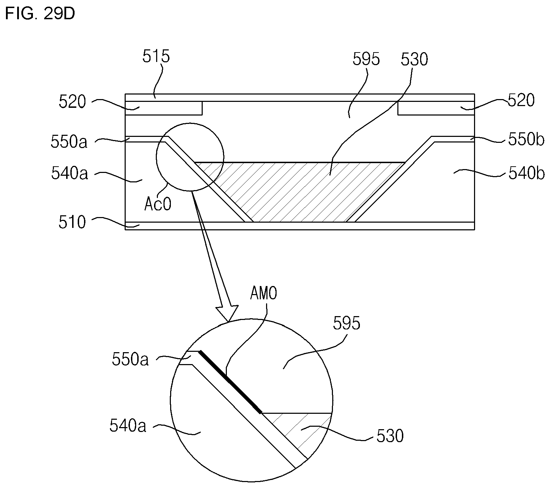

FIGS. 29B to 29D illustrate the structure of a liquid lens. More specifically, FIG. 29B is a top view of a liquid lens, FIG. 29C is a bottom view of the liquid lens, and FIG. 29D is a cross-sectional view taken along line I-I' of FIG. 29B and FIG. 29C.

Particularly, FIG. 29B may correspond to the right side of the liquid lens 500 in FIGS. 7A to 29A, and FIG. 29C may correspond to the left side of the liquid lens 500 in FIGS. 7A to 29A. In one embodiment, a plurality of liquid lens 500 may be disposed at positions corresponding to the second area 853 and the third area 855, respectively.

Referring to the figures, a common electrode (COM) 520 may be disposed at an upper portion of the liquid lens 500, as shown in FIG. 29B. In this case, the common electrode (COM) 520 may be arranged in a tubular shape. A liquid 530 may be disposed in a region under the common electrode (COM) 520, particularly, a region corresponding to the hollow.

Although not shown in the drawings, for insulation of the common electrode (COM) 520, an insulator (not shown) may be disposed between the common electrode (COM) 520 and the liquid.

As shown in FIG. 29C, a plurality of electrodes (LA to LD) 540a to 540d may be disposed under the common electrode (COM) 520, particularly, under the liquid 530. In particular, the plurality of electrodes (LA to LD) 540a to 540d may be arranged to surround the liquid 530.

In addition, a plurality of insulators 550a to 550d for insulation may be disposed between the liquid 530 and the plurality of electrodes (LA to LD) 540a to 540d.

That is, the liquid lens 500 may include the common electrode (COM) 520, the plurality of electrodes (LA to LD) 540a to 540d spaced apart from the common electrode (COM) 520, and the liquid 530 and an electroconductive aqueous solution 595 (see FIG. 29D) disposed between the common electrode (COM) 520 and the plurality of electrodes (LA to LD) 540a to 540d.

Referring to FIG. 29D, the liquid lens 500 may include a plurality of electrodes (LA to LD) 540a to 540d on a first substrate 510, a plurality of insulators 550a to 550d for insulation of the plurality of electrodes (LA to LD) 540a to 540d, a liquid 530 on the plurality of electrodes (LA to LD) 540a to 540d, an electroconductive aqueous solution 595 on the liquid 530, a common electrode (COM) 520 spaced apart from the liquid 530, and a second substrate 515 on the common electrode (COM) 520.

The common electrode 520 may formed in a tubular shape with a hollow. The liquid 530 and the electroconductive aqueous solution 595 may be disposed in the hollow space. The liquid 530 may be arranged in a circular shape, as shown in FIGS. 29B and 29C. In this case, the liquid 530 may be a non-conductive liquid such as oil.

The size of the hollow may increase from the bottom to the top, and accordingly, the size of the plurality of electrodes (LA to LD) 540a to 540d may decrease from the bottom to the top.

In FIG. 29D, it is illustrated that the first electrode (LA) 540a and the second electrode (LB) 540b, among the plurality of electrodes (LA to LD) 540a to 540d, are arranged in an inclined manner and decrease in size from the bottom to the top.

Alternatively, unlike FIGS. 29B to 29D, the plurality of electrodes (LA to LD) 540a to 540d may be provided at an upper position, and the common electrode 520 may be provided at a lower position, relative to each other.

In FIGS. 29B to 29D, four electrodes are used as an example of the plurality of electrodes, but the number of electrodes is not limited thereto. Two or more electrodes may be provided.

Meanwhile, in FIG. 29D, when an electrical signal in the form of a pulse is applied to the first electrode (LA) 540a and the second electrode (LB) 540b a predetermined time after an electrical signal in the form of a pulse is applied to the common electrode 520, a potential difference may occur between the common electrode 520 and the first electrode (LA) 540a and the second electrode (LB) 540b. This causes a change in shape of the electroconductive aqueous solution 595 having electrical conductivity, and the shape of the liquid 530 in the liquid lens changes in response to the shape change of the electroconductive aqueous solution 595.

Meanwhile, in the present disclosure, as the curvature of the liquid 530 varies according to an electrical signal applied to each of the plurality of electrodes (LA to LD) 540a to 540d and the common electrode 520, the focal length of the focus variable unit 365 may be adjusted.

To this end, a sensor (not shown) provided in the present disclosure is configured to detect the area (or size) of a boundary area Ac0 between the first insulator 550a on the first electrode 540a and the electroconductive aqueous solution 595 in the liquid lens 500 or a change in the area.

In FIG. 29D, the area of the boundary area Ac0 is shown as AM0. In particular, it is illustrated that the area of the boundary area Ac0 in contact with the electroconductive aqueous solution 595 in the inclined portion of the first insulator 550a on the first electrode 540a is AM0.

In FIG. 29D, it is illustrated that the liquid 530 is neither concave nor convex, but is parallel to the first substrate 510. The curvature given in this case may be defined as zero (0), for example.

As shown in FIG. 29D, for the boundary area Ac0 in contact with the electroconductive aqueous solution 595 in the inclined portion of the first insulator 550 on the first electrode 540a, a capacitance C may be defined by Equation 1 below.

【Equation 1】

$$C = \varepsilon \frac{A}{d}$$

In Equation 1, $\varepsilon$ denotes the permittivity of a dielectric 550a, A denotes the area of the boundary area Ac0, and d denotes the thickness the first dielectric 550a.

Here, when it is assumed that '$\varepsilon$' and 'd' are a fixed value, the area of the boundary area Ac0 may be an important factor that greatly affects the capacitance C.

That is, as the area of the boundary area Ac0 increases, the capacitance C formed in the boundary area Ac0 may increase.

In the present disclosure, since the area of the boundary area Ac0 changes as the curvature of the liquid 530 changes. Therefore, in the present disclosure, the area of the boundary area Ac0 or the capacitance C formed in the boundary area Ac0 is detected using a sensor.

Meanwhile, the capacitance of FIG. 29D may be defined as CAc0.

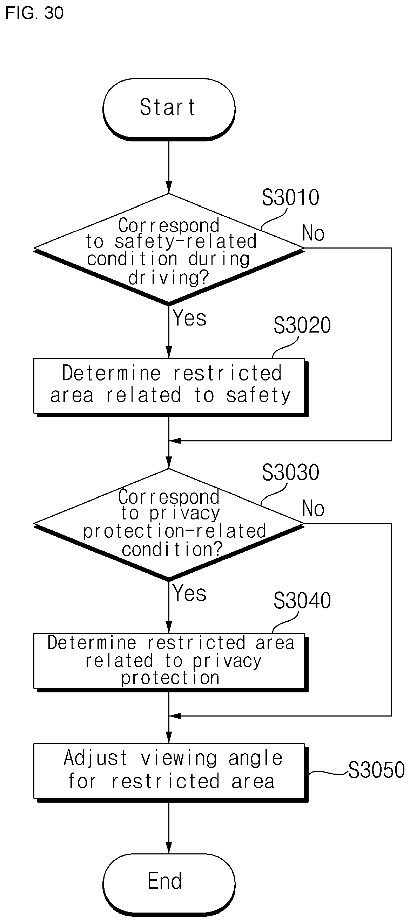

FIGS. 30 is a flowchart illustrating a method of operating a display apparatus for vehicle according to an embodiment of the present disclosure. In the following description, it can be understood that at least some of the operations performed by the vehicle display apparatus 100 are performed by the signal processing device 170 and/or the processor 370.

Referring to FIG. 30, in operation S3010, the vehicle display apparatus 100 may determine whether it corresponds to a condition related to driving of the vehicle 200 (hereinafter referred to as a "safety-related condition"). Here, the safety-related condition may correspond to a condition related to safety during driving of the vehicle 200.

In one embodiment, the vehicle display apparatus 100 may determine whether it corresponds to the safety-related condition based on at least one of the speed of the vehicle 200, the state of a transmission, the setting (or selection) of an autonomous mode, the use of a viewing angle adjustable area in the screen 850, the type of an image output through the screen 850, and the user's gaze. For example, the vehicle display apparatus 100 may determine that the safety-related condition is satisfied when a user input for adjusting the viewing angle of the screen 850 is received through the input unit 110 during driving. For example, the vehicle display apparatus 100 may determine that the safety-related condition is satisfied when the speed of the vehicle 200 is greater than or equal to a preset speed limit (e.g., 10 km per hour), and may determine that the safety-related condition is not satisfied when the speed of the vehicle 200 is less than the preset speed limit (e.g., 10 km per hour). For example, the vehicle display apparatus 100 may determine that it corresponds to a first mode when the autonomous mode is set, and may determine that the safety-related condition is not satisfied when a manual mode is set. For example, the vehicle display apparatus 100 may determine that the safety-related condition is not satisfied when only driving-related content (e.g., the instrument panel and navigation information) is output through the screen 850.

In one embodiment, the vehicle display apparatus 100 may perform a determination on the safety-related condition when the transmission is in drive (D), reverse (R), or neutral (N), and may stop (or terminate) the determination on the safety-related condition when the transmission is in park (P).

In one embodiment, data corresponding to the eyes of a user located in the driver seat may be obtained through the internal camera provided in the vehicle 200. In this case, the vehicle display apparatus 100 may stop the determination on the safety-related condition when it is determined that the driver's gaze is directed forward, based on driver's gaze information.

In operation S3020, when it corresponds to the safety-related condition, the vehicle display apparatus 100 may determine a restricted area related to driving safety (hereinafter referred to as a "safety-related area") in the screen 850.

In one embodiment, when it corresponds to the safety-related condition, the vehicle display apparatus 100 may determine one area of the screen 810 adjacent to the passenger seat as the safety-related area. For example, the one area of the screen 850 adjacent to the passenger seat may include at least the third area 855. Meanwhile, the area (or size) of the safety-related area may increase as the speed of the vehicle 200 increases. For example, when the speed of the vehicle 200 is less than a first speed (e.g., 60 km/h), the third area 855 may be included in the safety-related area. For example, when the speed of the vehicle 200 is greater than or equal to the first speed (e.g., 60 km/h) but less than a second speed (e.g., 80 km/h), the third area 855 and a part (or portion) of the second area 853 adjacent to the third area 855 may be included in the safety-related area. For example, when the speed of the vehicle 200 is greater than or equal to a third speed (e.g., 100 km/h), the second area 853 and the third area 855 may be included in the safety-related area. That is, as the speed of the vehicle 200 increases, the size of the second area 853 included in the safety-related area may increase in the direction toward the driver seat. In this case, as the speed of the vehicle 200 changes, the size of the second area 853 included in the safety-related area may gradually change.

In one embodiment, the vehicle display apparatus 100 may determine the safety-related area based on the type of content output through the screen 850. For example, based on driving-related content (e.g., the instrument panel and navigation information) being output through the screen 850, the vehicle display apparatus 100 may determine the safety-related area in a remaining area of the screen 850 excluding an area where the driving-related content is output. For example, based on video content, such as a movie, a game, OTT service, or the like, being output through the screen 850, the vehicle display apparatus 100 may determine an area of the screen 850 where the video content is output as the safety-related area.

In operation S3030, the vehicle display apparatus 100 may determine whether it corresponds to a condition related to privacy (hereinafter referred to as a "privacy-related condition"). Here, the privacy-related condition may include at least one of a condition related to privacy of the driver 10 and a condition related to privacy of the passenger 20. For example, when content corresponding to the passenger seat is output through the screen 850, the vehicle display apparatus 100 may determine that it corresponds to the condition related to the privacy of the passenger 20. In this case, the content corresponding to the passenger seat may include content transmitted to the vehicle 200 from a mobile device of the passenger 20, content preset to correspond to the passenger 20, etc.

Meanwhile, in one embodiment, the vehicle display apparatus 100 may perform a determination on the privacy-related condition based on the absence or presence of the passenger 20 in the passenger seat. For example, data corresponding to the passenger seat may be obtained through the internal camera provided in the vehicle 200. In this case, based on the passenger 20 being located in the passenger seat, the vehicle display apparatus 100 may perform the determination on the privacy-related condition. By contrast, based on the passenger 20 not being located in the passenger seat, the vehicle display apparatus 100 may stop (or terminate) the determination on the privacy-related condition.

In operation S3040, when it corresponds to the privacy-related condition, the vehicle display apparatus 100 may determine a restricted area related to privacy (hereinafter referred to as a "privacy-related area") in the screen 850. For example, when a message transmitted from the mobile device of the passenger 20 to the vehicle 200 is output through the second area 853 of the screen 850, the second area 853 may be determined as the privacy-related area. For example, when video content preset (or designated) as exclusive content for the passenger 20 is output through the third area 855 of the screen 850, the third area 855 may be determined as the privacy-related area.

In operation S3050, the vehicle display apparatus 100 may adjust a viewing angle for the restricted aera.

In one embodiment, the vehicle display apparatus 100 may apply voltage to the viewing angle adjustment panel 1100 corresponding to one area of the screen 850 determined as at least one of the safety-related area and the privacy-related area. For example, when the third area 855 is determined as the safety-related area and the second area 853 is determined as the privacy-related area, the vehicle display apparatus 100 may apply voltage to the plurality of sub-units 2810 respectively corresponding to the second area 853 and the third area 855.

In one embodiment, a focus of the focus variable unit 365 corresponding to one area of the screen 850 determined as at least one of the safety-related area and the privacy-related area may be changed. For example, when the third area 855 is determined as the privacy-related area, the vehicle display apparatus 100 may output an electrical signal to the liquid lens 500 corresponding to the third area 855, so that the focus of the liquid lens 500 corresponding to the third area 855 is directed to the driver seat. In this case, the vehicle display apparatus 100 may apply voltage to the plurality of sub-units 2810 corresponding to the third area 855, thereby further limiting the viewing angle for the passenger seat.

In one embodiment, data corresponding to the eyes of a user located in the driver seat may be obtained through the internal camera provided in the vehicle 200. In this case, when the driver's gaze is determined to be directed forward, the vehicle display apparatus 100 may release the restriction on emission of light toward the driver seat. For example, when the driver's gaze is directed forward, the vehicle display apparatus 100 may stop applying voltage to the second upper substrate 1233 and the second lower substrate 1234.

In one embodiment, data corresponding to the driver seat and/or the passenger seat may be obtained through the internal camera provided in the vehicle 200. In this case, based on the driver 10 not being located in the driver seat, the vehicle display apparatus 100 may release the restriction on emission of light toward the driver seat. For example, when the driver 10 is not located in the driver seat, the vehicle display apparatus 100 may stop applying voltage to the second upper substrate 1233 and the second lower substrate 1234. In addition, based on the passenger 20 not being located in the passenger seat, the vehicle display apparatus 100 may release the restriction on emission of light toward the passenger seat. For example, when the passenger 20 is not located in the passenger seat, the vehicle display apparatus 100 may stop applying voltage to the third upper substrate 1235 and the third lower substrate 1236.

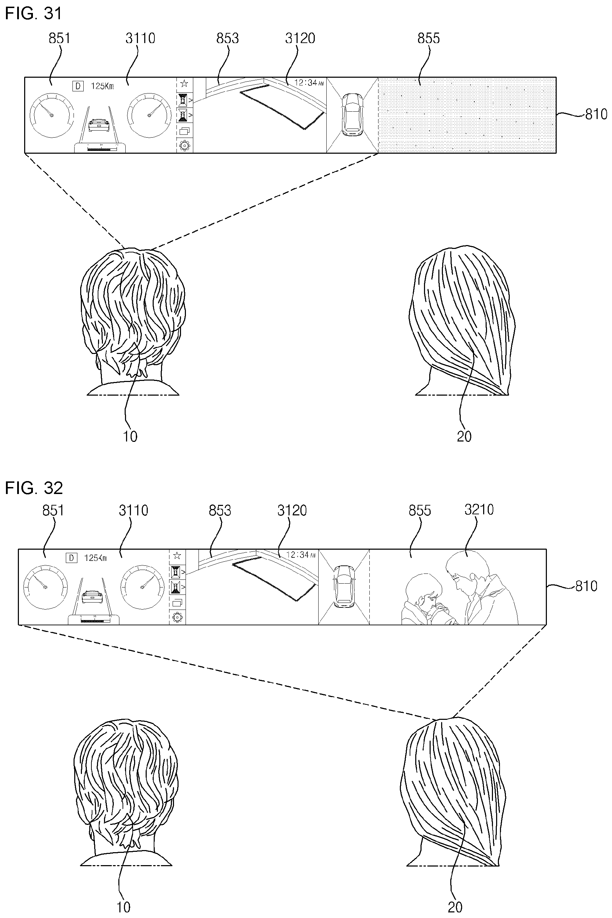

Referring to FIGS. 31 and 32, an instrument panel screen 3110 may be output through the first area 851 of the screen 850. An around view monitor screen 3120 may be output through the second area 853 of the screen 850 via the camera 310. In this case, as the instrument panel screen 3110 and the around view monitor screen 3120 are driving-related content, the vehicle display apparatus 100 may determine the safety-related area in a remaining area excluding the first area 851 and the second area 853.

Movie-related video content 3210 may be output through the third area 855 of the screen 850. In this case, the vehicle display apparatus 100 may determine the third area 855 of the screen 850, where the movie-related content 3210 corresponding to video content is output, as the safety-related area. Meanwhile, when the movie-related video content 3210 is transmitted from the mobile device of the passenger 20 or is preset as exclusive content for the passenger 20, the vehicle display apparatus 100 may determine the third area 855 of the screen 850 as the privacy-related area. Here, the third area 855 where the movie-related content 3210 is output may correspond to a restricted area related to privacy of the passenger seat (hereinafter referred to as a "passenger seat-related area") in the privacy-related area.

The vehicle display apparatus 100 may restrict light emitted toward the driver seat from the third area 855 of the screen 850, which is determined as the safety-related area and/or the passenger seat-related area.

The vehicle display apparatus 100 may apply voltage to the second upper substrate 1233 and the second lower substrate 1234 disposed in one area of the viewing angle adjustment panel 1100 that corresponds to the third area 855 of the screen 850. In this case, as the arrangement of the liquid crystal molecules corresponding to the second liquid layer 1212 is changed, light emitted toward the driver seat from the third area 855 may be restricted.

The vehicle display apparatus 100 may apply an electrical signal to the focus variable unit 365. In this case, as the focus of the liquid lens 500 is shifted toward the passenger seat corresponding to the third area 855 of the screen 850, light emitted toward the driver seat from the third area 855 may be restricted.

Thus, while the safety-related condition associated with driving of the vehicle 200 is satisfied, the driver 10 may only be able to view the instrument panel screen 3110 and the around view monitor screen 3120, and may not be able to view the movie-related video content 3210. In addition, even when the safety-related condition associated with driving of the vehicle 200 is not satisfied, the driver 10 may not be able to view the movie-related video content 3210. By contrast, the passenger 20 may be able to view all of the instrument panel screen 3110, the around view monitor screen 3120, and the movie-related video content 3210.

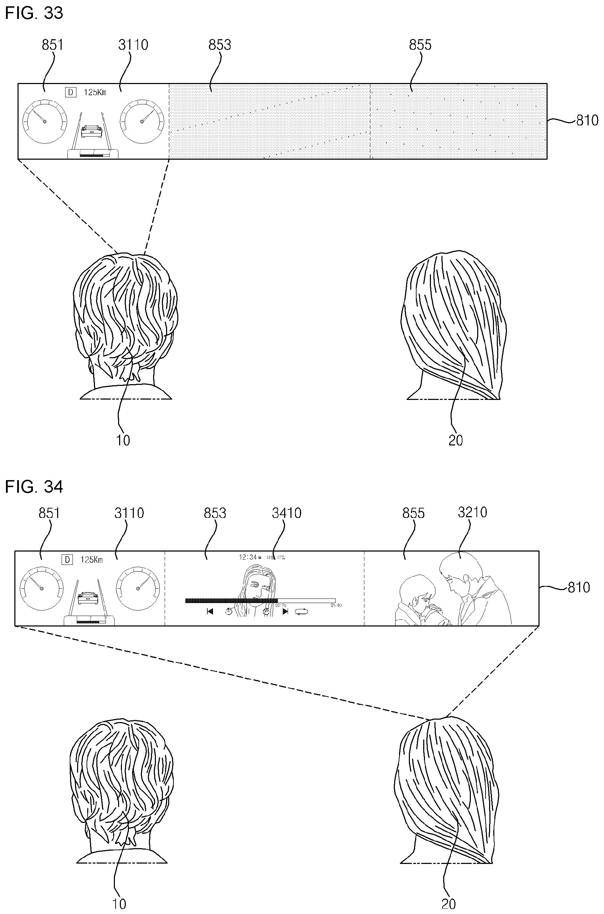

In FIGS. 33 to 44, description will be given under the assumption that the first area 851 of the screen 850 where the instrument panel screen 3110 is output is not included in the safety-related area and the passenger seat-related area. In addition, it will be described that the third area 855 of the screen 850 where movie-related video content is output is included in the safety-related area.

Referring to FIG. 33 and 34, based on both real-time OTT service-related content 3410 output through the second area 853 and movie-related content 3210 output through the third area 855 being video content, the vehicle display apparatus 100 may determine the second area 853 and the third area 855 as the safety-related area.

The vehicle display apparatus 100 may restrict light emitted toward the driver seat from the second area 853 and the third area 855 of the screen 850, which are determined as the safety-related area. The vehicle display apparatus 100 may apply voltage to the second upper substrate 1233 and the second lower substrate 1234 disposed in one area of the viewing angle adjustment panel 1100 that corresponds to the second area 853 and the third area 855 of the screen 850. In this case, as the arrangement of the liquid crystal molecules of the second liquid crystal layer 1212 corresponding to the second area 853 and the third area 855 is changed, light emitted from the second area 853 and the third area 855 toward the driver seat may be restricted.

The vehicle display apparatus 100 may apply voltage to the focus variable unit 365. In this case, as the focus of the liquid lens 500 corresponding to the second area 853 and/or the liquid lens 500 corresponding to the third area 855 of the screen 850 is shifted toward the passenger seat, light emitted toward the driver seat from the third area 855 may be restricted.

Thus, the driver 10 may only be able to view the instrument panel screen 3110, and may not be able to view the real-time OTT service-related content 3410 and the movie-related content 3210. By contrast, the passenger 20 may be able to view all of the instrument panel screen 3110, the real-time OTT service-related content 3410 and the movie-related content 3210.

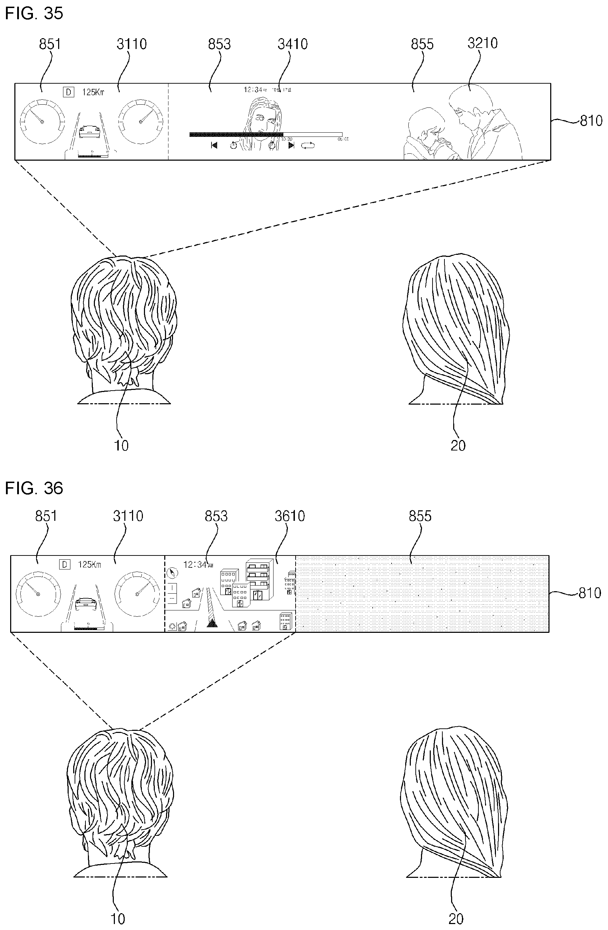

Meanwhile, referring to FIG. 35, when the speed of the vehicle 200 is less than a preset speed limit (e.g., 10 km per hour), when the autonomous mode is set, when the state of the transmission is park (P), etc., it may not correspond to the safety-related condition associated with driving of the vehicle 200.

In this case, the vehicle display apparatus 100 may stop applying voltage to the second upper substrate 1233 and the second lower substrate 1234 disposed in one area of the viewing angle adjustment panel 1100. In addition, the vehicle display apparatus 100 may apply an electrical signal to the focus variable unit 365 so that the liquid lens 500 corresponding to the second area 853 of the screen 850 and/or the liquid lens 500 corresponding to the third area 855 of the screen 850 is focused forward. Accordingly, like the passenger 20, the driver 10 may be able to view all of the instrument panel screen 3110, the real-time OTT service-related content 3410, and the movie-related content 3210.

Meanwhile, when the real-time OTT service-related content 3410 is transmitted from the mobile terminal of the passenger 20 or is preset as exclusive content for the passenger 20, the vehicle display apparatus 100 may determine the second area 853 of the screen 850 as the passenger seat-related area. When the second area 853 is the passenger seat-related area, although it does not correspond to the safety-related condition, the vehicle display apparatus 100 may continue to apply voltage to the second upper substrate 1223 and the second lower substrate 1234 disposed in one area of the viewing angle adjustment panel 1100. In addition, the vehicle display apparatus 100 may maintain a state in which the focus of the liquid lens 500 corresponding to the second area 853 is directed to the passenger seat. Accordingly, when the second area 853 is the passenger seat-related area, the driver 10 may only be able to view the instrument panel screen 3110 and the movie-related content 3210.

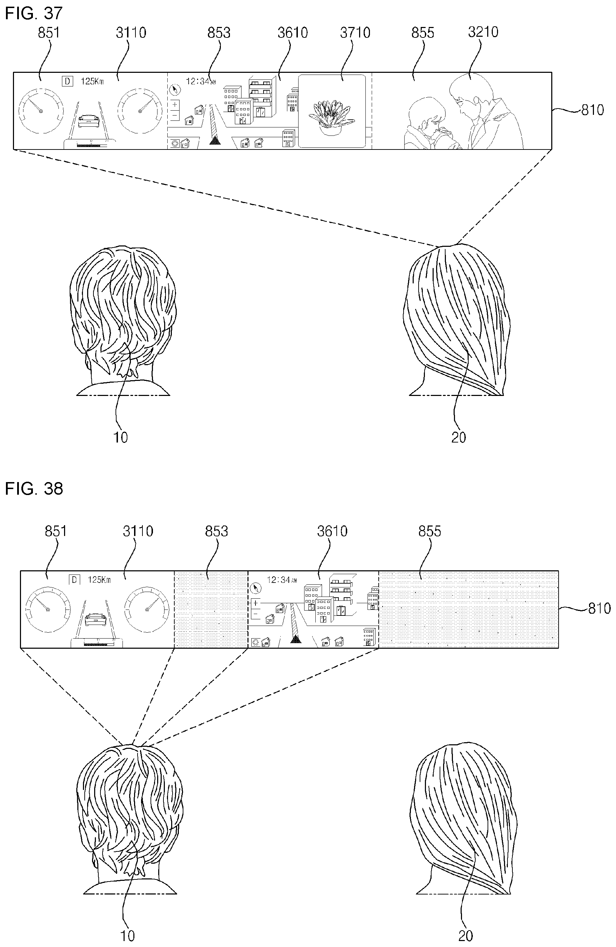

Referring to FIGS. 36 and 37, a navigation screen 3610 and photo-related content 3710 may be output through the second area 853 of the screen 850. As both the instrument panel screen 3110 output through the first area 851 and the navigation screen 3610 output through the second area 853 are driving-related content, the vehicle display apparatus 100 may determine, between the first area 851 and the second area 853, the safety-related area in a remaining area excluding an area where the navigation screen 3610 is output.

When the speed of the vehicle 200 is greater than or equal to a preset speed limit (e.g., 10 km per hour), the vehicle display apparatus 100 may determine the third area 855, where movie-related content 3210 is output, as the safety-related area. Meanwhile, when the speed of the vehicle 200 is a predetermined speed (e.g., 60 km/h), the vehicle display apparatus 100 may determine an area where the photo-related content 3710 is output as the safety-related area, between the third area 855 and the second area 853.

Thus, when the speed of the vehicle 200 is greater than or equal to the preset speed limit (e.g., 10 km/h) and less than the predetermined speed (e.g., 60 km/h), the driver 10 may be able to view the instrument panel screen 3110, the navigation screen 3610, and the photo-related content 3710. In addition, when the speed of the vehicle 200 is greater than or equal to the predetermined speed (e.g., 60 km/h), the driver 10 may only be able to view the instrument panel screen 3110 and the navigation screen 3610.

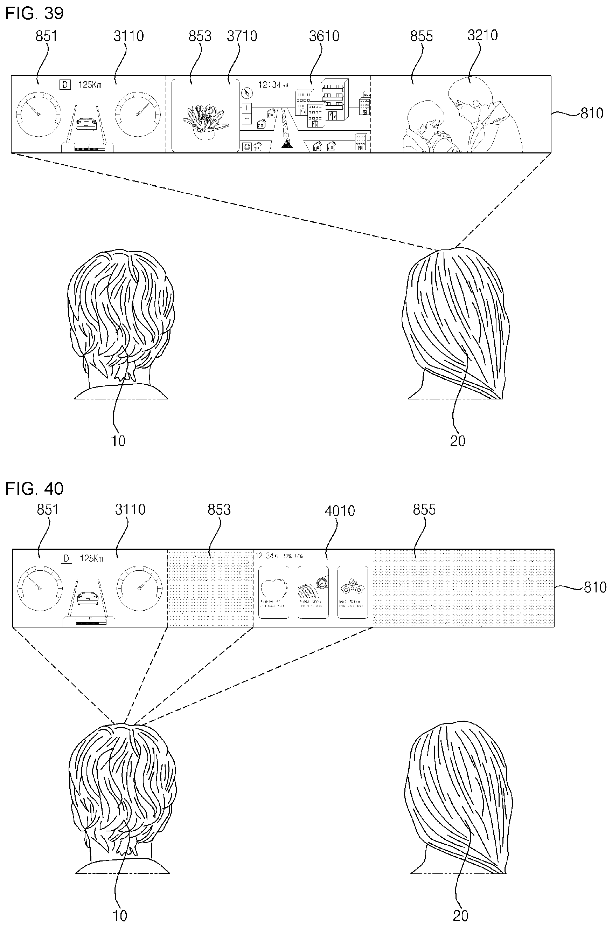

Referring to FIGS. 38 and 39, a navigation screen 3610 and photo-related content 3710 may be output through the second area 853 of the screen 850. As both the instrument panel screen 3110 output through the first area 851 and the navigation screen 3610 output through the second area 853 are driving-related content, the vehicle display apparatus 100 may determine, between the first area 851 and the second area 853, the safety-related area in a remaining area excluding an area where the navigation screen 3610 is output.

Meanwhile, when the movie-related video content 3210 and the photo-related content 3710 are transmitted from the mobile device of the passenger 20 to the vehicle 200, the vehicle display apparatus 100 may determine the third area 855 and a part of the second area 853 where the photo-related content 3710 is output as the passenger seat-related area.

The vehicle display apparatus 100 may restrict light emitted toward the driver seat from the third area 855 of the screen 850, which is determined as the safety-related area and the passenger seat-related area. In addition, the vehicle display apparatus 100 may restrict light emitted toward the driver seat from the part of the second area 853 where the photo-related content 3710 is output, which is determined as the passenger seat-related area.

Thus, while the safety-related condition associated with driving of the vehicle 200 is satisfied, the driver 10 may only be able to view the instrument panel screen 3110 and the navigation screen 3610, and may not be able to view the movie-related video content 3210 and the photo-related content 3710. In addition, the driver 10 may not be able to view the movie-related video content 3210 and the photo-related content 3710 even when the safety-related condition associated with driving of the vehicle 200 is not satisfied. By contrast, the passenger 20 may be able to view all of the instrument panel screen 3110, the photo-related content 3710, the navigation screen 3610, and the movie-related video content 3210.

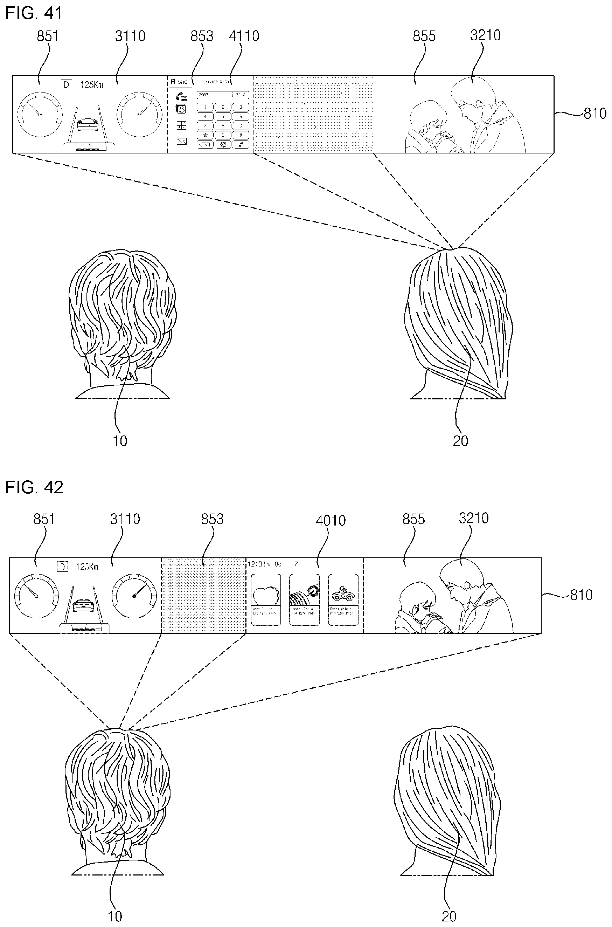

Referring to FIGS. 40 and 41, contact-related content 4010 and keypad-related content 4110 may be output through the second area 853 of the screen 850. In this case, the contact-related content 4010 may be transmitted from a mobile device of the driver 10 to the vehicle 200. In addition, the keypad-related content 4110 may be preset as exclusive content for the passenger 20.

Meanwhile, when the contact-related content 4010 is transmitted from the mobile device of the driver 10 to the vehicle 200, the vehicle display apparatus 100 may determine a part of the second area 853 where the contact-related content 4010 is output as the privacy-related area. In this case, the part of the second area 853 where the contact-related content 4010 is output may correspond to a restricted area related to privacy of the driver seat (hereinafter referred to as a "a driver-related area") in the privacy-related area. In addition, a part of the second area 853 where the keypad-related content 4110 preset as exclusive content for the passenger 20 is output may correspond to the passenger seat-related area in the privacy-related area.

The vehicle display apparatus 100 may restrict light emitted toward the driver seat from the third area 855 of the screen 850, which is determined as the safety-related area. In addition, the vehicle display apparatus 100 may restrict light emitted toward the driver seat from the part of the second area 853 where the keypad-related content 4110 is output, which is determined as the third restricted area.

Meanwhile, the vehicle display apparatus 100 may restrict light emitted toward the passenger seat from the part of the second area 853 where the contact-related content 4010 is output, which is determined as the driver-related area. The vehicle display apparatus 100 may apply voltage to the third upper substrate 1235 and the third lower substrate 1236 disposed in one area of the viewing angle adjustment panel 1100 corresponding to the area where the contact-related content 4010 is output. In this case, as the arrangement of the liquid crystal molecules corresponding to the area where the contact-related content 4010 is output is changed, light emitted toward the passenger seat from the area where the contact-related content 4010 is output.

Thus, while the safety-related condition associated with driving of the vehicle 200 is satisfied, the driver 10 may only be able to view the instrument screen panel 4310 and the contact-related content 4010, and may not be able to view the movie-related video content 3210 and the keypad-related content 4110. In addition, the passenger 20 may only be able to view the instrument panel screen 4310, the keypad-related content 4110, and the movie-related video content 3210, and may not be able to view the contact-related content 4010.

Meanwhile, referring to FIG. 42, when the speed of the vehicle 200 is less than a preset speed limit (e.g., 10 km per hour), when the autonomous mode is set, when the state of the transmission is park (P), etc., it may not correspond to the safety-related condition associated with driving of the vehicle 200. In this case, the vehicle display apparatus 100 may stop applying voltage to the second upper substrate 1233 and the second lower substrate 1234 disposed in one area of the viewing angle adjustment panel 1100. In addition, the vehicle display apparatus 100 may apply an electrical signal to the focus variable unit 365 so that the liquid lens 500 corresponding to the third area 855 is focused forward. Accordingly, like the passenger 20, the driver 10 may be able to view the movie-related content 3210.

Meanwhile, when the safety-related condition associated with driving of the vehicle 200 is not satisfied, the driver 10 may not be able to view the keypad-related content 4110 output through a part of the second area 853.

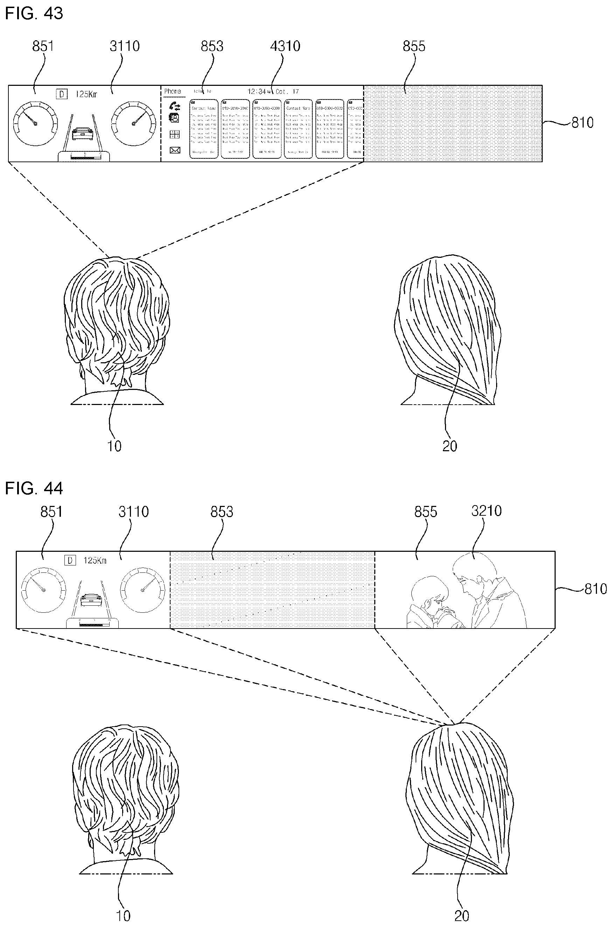

Referring to FIGS. 43 and 44, movie-related content 3210 may be transmitted from the mobile device of the passenger 20 to the vehicle 200, or may be set as exclusive content for the passenger 20. In this case, the third area 855 where the movie-related content 3210 is output may be determined as the passenger seat-related area in the privacy-related area. In addition, text message-related content 4310 may be transmitted from the mobile device of the driver 10 to the vehicle 200, or may be set as exclusive content for the driver 10. In this case, the second area 853 where the text message-related content 4310 is output may be determined as the driver seat-related area in the privacy-related area.

The vehicle display apparatus 100 may restrict light emitted toward the driver seat from the third area 855 determined as the passenger seat-related area. In addition, the vehicle display apparatus 100 may restrict light emitted toward the passenger seat from the second area 853 determined as the driver seat-related area. Accordingly, the driver 10 may only be able to view the instrument panel screen 3110 and the text message-related content 4310, and may not be able to view the movie-related video content 3210. In addition, the passenger 20 may only be able to view the instrument panel screen 3110 and the movie-related video content 3210, and may not be able to view the text message-related content 4310.

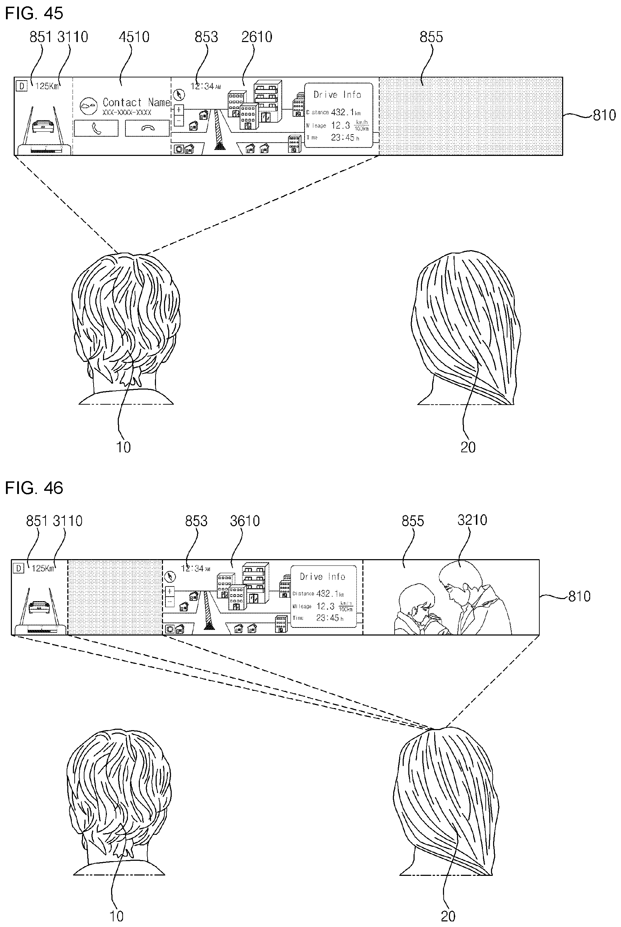

Referring to FIGS. 45 and 46, as movie-related content 3210 corresponding to video content is output through the third area 855, the vehicle display apparatus 100 may determine the third area 855 as the first restricted area. In addition, call function-related content 4510 may be preset as exclusive content for the driver 10. In this case, a part of the first area 851 where the call function-related content 4510 is output may be determined as the driver seat-related area in the privacy-related area.

The vehicle display apparatus 100 may restrict light emitted toward the driver seat from the third area 855, which is determined as the safety-related area. In addition, the vehicle display apparatus 100 may restrict light emitted toward the passenger seat from the part of the first area 851 where the call function-related content 4510 is output, which is determined as the driver seat-related area.

Thus, while the safety-related condition associated with driving of the vehicle 200 is satisfied, the driver 10 may only be able to view the instrument panel screen 3110, the call function-related content 4510, and the navigation screen 3610, and may not be able to view the movie-related video content 3210. By contrast, the passenger 20 may only be able to view the instrument panel screen 3110, the navigation screen 3610, and the movie-related video content 3210, and may not be able to view the call function-related content 4510.

As described above, according to at least one embodiment of the present disclosure, it is possible to adjust the viewing angle for the display 180a, 180b.

According to at least one embodiment of the present disclosure, it is possible to adjust display areas where the viewing angle is adjustable in various manners.

According to at least one embodiment of the present disclosure, it is possible to protect a particular person in the vehicle from privacy exposure to another person in the vehicle.

Referring to FIGS. 1 to 46, a display apparatus 100 for a vehicle according to an embodiment of the present disclosure includes: a picture generation device 300 including a light output device 400 and configured to output a projection image; an optical path separator 310 configured to reflect a first projection image, which is a part of the projection image; a screen Scr having one surface onto which the first projection image reflected by the optical path separator 310 is projected; a viewing angle adjustment panel 1100 including a liquid crystal layer composed of liquid crystal molecules to allow at least part of light emitted from the screen Scr to pass through; and a signal processing device 170 configured to output a signal for adjusting an arrangement of the liquid crystal molecules to the viewing angle adjustment panel 1100 such that a viewing angle for one area of the screen Scr is adjusted. A second projection image, which is another part of the projection image, may be projected onto a windshield WS.

In one implementation, the viewing angle adjustment panel 1100 may include: a first liquid layer 1212 including first liquid crystal molecules whose arrangement is changed in a first direction that restricts emission of light toward a driver seat; and a second liquid layer 1213 including second liquid crystal molecules whose arrangement is changed in a second direction that restricts emission of light toward a passenger seat.

In one implementation, the signal processing device 170 may be configured to: determine a first restricted area of the screen Scr based on a first condition related to driving of the vehicle; determine a second restricted area of the screen Scr based on a second condition related to privacy; and control the viewing angle adjustment panel 1100 to adjust a viewing angle for the first restricted area and the second restricted area.

In one implementation, the signal processing device 170 may be configured to: change the arrangement of the first liquid crystal molecules disposed in a first adjustment area of the viewing angle adjustment panel 1100 that corresponds to one of the first restricted area and a third restricted area related to privacy of the passenger seat in the second restricted area; and change the arrangement of the second liquid crystal molecules disposed in a second adjustment area of the viewing angle adjustment panel 1100 that corresponds to a fourth restricted area related to privacy of the driver seat in the second restricted area.

In one implementation, the viewing angle adjustment panel 1100 may consist of a plurality of sub-units 2810 disposed side by side to independently control the arrangement of the liquid crystal molecules. The plurality of sub-units 2810 may respectively correspond to a plurality of areas constituting the screen Scr.

In one implementation, the display apparatus 100 may further include a focus variable unit disposed between the optical path separator 310 and the screen Scr so as to change a focus of at least a part of the first projection image reflected by the optical path separator 310. The signal processing device 170 may be configured to output a signal for adjusting the focus such that a viewing angle for one area of the screen Scr is adjusted.

In one implementation, the focus variable unit 365 may include a liquid lens 500 that changes a focus in response to an electrical signal.

A display apparatus 100 for a vehicle according to another embodiment of the present disclosure includes: a picture generation device 300 including a light output device 400 and configured to output a projection image; an optical path separator 310 configured to reflect a first projection image, which is a part of the projection image; a screen Scr having one surface onto which the first projection image reflected by the optical path separator 310 is projected; a focus variable unit 365 disposed between the optical path separator 310 and the screen Scr so as to change a focus of at least a part of the first projection image reflected by the optical path separator 310; and a signal processing device 170 configured to output a signal for adjusting the focus such that a viewing angle for one area of the screen Scr is adjusted. A second projection image, which is another part of the projection image, may be projected onto a windshield WS.

In one implementation, the focus variable unit 365 may include a liquid lens 500 that changes a focus in response to an electrical signal.

In one implementation, the signal processing device 170 may be configured to determine a first restricted area of the screen Scr based on a first condition related to driving of the vehicle; determine a second restricted area of the screen Scr based on a second condition related to privacy; and control the focus variable unit 365 to adjust a viewing angle for at least one of the first restricted area and the second restricted area.

In one implementation, the signal processing device 170 may be configured to: change the focus in a first direction corresponding to a passenger seat when one area of the screen Scr corresponding to the liquid lens 500 corresponds to at least one of the first restricted area and a third restricted area related to privacy of the passenger seat in the second restricted area; and change the focus in a second direction corresponding to a driver seat when one area of the screen Scr corresponding to the liquid lens 500 corresponds to a fourth restricted area related to privacy of the driver seat in the second restricted area.

In one implementation, the display apparatus 100 may further include a viewing angle adjustment panel including a liquid crystal layer composed of liquid crystal molecules to allow at least part of light emitted from the screen Scr to pass through. The signal processing device 170 may be configured to output a signal for adjusting an arrangement of the liquid crystal molecules to the viewing angle adjustment panel 1100 such that a viewing angle for one area of the screen Scr is adjusted.

In one implementation, the viewing angle adjustment panel 1100 may include: a first liquid layer 1212 including first liquid crystal molecules whose arrangement is changed in a first direction that restricts emission of light toward a driver seat; and a second liquid layer 1213 including second liquid crystal molecules whose arrangement is changed in a second direction that restricts emission of light toward a passenger seat.

In one implementation, the viewing angle adjustment panel 1100 may consist of a plurality of sub-units 2810 disposed side by side to independently control the arrangement of the liquid crystal molecules. The plurality of sub-units 2810 may respectively correspond to a plurality of areas constituting the screen Scr.

In one implementation, the signal processing device 170 may be configured to: upon changing a viewing angle for entire one area of the screen Scr, control at least one of the focus variable unit 365 and the viewing angle adjustment panel 1100; and upon changing a viewing angle for a part of one area of the screen Scr, control the viewing angle adjustment panel 1100.

The above description should not be construed as restrictive in all aspects but considered as illustrative. The scope of the disclosure should be determined by reasonable interpretation of the appended claims and all changes that come within the equivalent scope of the disclosure are included in the scope of the disclosure.

Meanwhile, the method of operating the vehicle display apparatus of the present disclosure can be implemented as processor-readable code in a recording medium readable by a processor provided in the vehicle display apparatus. The processor-readable recording medium may be any type of recording device capable of storing data readable by a processor. Examples of the processor-readable recording medium may include a ROM, a RAM, a CD-ROM, a magnetic tape, a floppy disc, and an optical data storage device. Also, the processor-readable recording medium may be implemented as a carrier wave (e.g., data transmission over the Internet). The processor-readable recording medium may be distributed to a computer system connected via a network so that the processor-readable codes may be saved and executed in a distributed manner.

Although the preferred embodiments of the present disclosure have been illustrated and described, those skilled in the art will appreciate that the present disclosure should not be limited to the above specific embodiments and various modifications thereof are possible without departing from the scope and spirit of the disclosure as disclosed in the accompanying claims, and these modifications should not be understood independently of the technical idea of the present disclosure.

**Claims**

1. A display apparatus for a vehicle, the display apparatus comprising:

    a picture generation device including a light output device and configured to output a projection image;
    an optical path separator configured to reflect a first projection image, which is a part of the projection image;
    a screen having one surface onto which the first projection image reflected by the optical path separator is projected;
    a viewing angle adjustment panel including a liquid crystal layer composed of liquid crystal molecules to allow at least part of light emitted from the screen to pass through; and
    a signal processing device configured to output a signal for adjusting an arrangement of the liquid crystal molecules to the viewing angle adjustment panel such that a viewing angle for one area of the screen is adjusted,
    wherein a second projection image, which is another part of the projection image, is projected onto a windshield.

2. The display apparatus of claim 1, wherein the viewing angle adjustment panel comprises:

    a first liquid layer including first liquid crystal molecules whose arrangement is changed in a first direction that restricts emission of light toward a driver seat; and
    a second liquid layer including second liquid crystal molecules whose arrangement is changed in a second direction that restricts emission of light toward a passenger seat.

3. The display apparatus of claim 2, wherein the signal processing device is configured to:

    determine a first restricted area of the screen based on a first condition related to driving of the vehicle;
    determine a second restricted area of the screen based on a second condition related to privacy; and
    control the viewing angle adjustment panel to adjust a viewing angle for the first restricted area and the second restricted area.

**4.** The display apparatus of claim 3, wherein the signal processing device is configured to:

> change the arrangement of the first liquid crystal molecules disposed in a first adjustment area of the viewing angle adjustment panel that corresponds to one of the first restricted area and a third restricted area related to privacy of the passenger seat in the second restricted area; and
> change the arrangement of the second liquid crystal molecules disposed in a second adjustment area of the viewing angle adjustment panel that corresponds to a fourth restricted area related to privacy of the driver seat in the second restricted area.

**5.** The display apparatus of claim 1, wherein the viewing angle adjustment panel consists of a plurality of sub-units disposed side by side to independently control the arrangement of the liquid crystal molecules, and
wherein the plurality of sub-units respectively correspond to a plurality of areas constituting the screen.

**6.** The display apparatus of claim 1, further comprising a focus variable unit disposed between the optical path separator and the screen so as to change a focus of at least a part of the first projection image reflected by the optical path separator,
wherein the signal processing device is configured to output a signal for adjusting the focus such that a viewing angle for one area of the screen is adjusted.

**7.** The display apparatus of claim 6, wherein the focus variable unit includes a liquid lens that changes a focus in response to an electrical signal.

**8.** A display apparatus for a vehicle, the display apparatus comprising:

> a picture generation device including a light output device and configured to output a projection image;
> an optical path separator configured to reflect a first projection image, which is a part of the projection image;
> a screen having one surface onto which the first projection image reflected by the optical path separator is projected;
> a focus variable unit disposed between the optical path separator and the screen so as to change a focus of at least a part of the first projection image reflected by the optical path separator; and
> a signal processing device configured to output a signal for adjusting the focus such that a viewing angle for one area of the screen is adjusted,

> wherein a second projection image, which is another part of the projection image, is projected onto a windshield.

**9.** The display apparatus of claim 8, wherein the focus variable unit includes a liquid lens that changes a focus in response to an electrical signal.

**10.** The display apparatus of claim 8, wherein the signal processing device is configured to:

> determine a first restricted area of the screen based on a first condition related to driving of the vehicle;
> determine a second restricted area of the screen based on a second condition related to privacy; and
> control the focus variable unit to adjust a viewing angle for at least one of the first restricted area and the second restricted area.

**11.** The display apparatus of claim 10, wherein the signal processing device is configured to:

> change the focus in a first direction corresponding to a passenger seat when one area of the screen corresponding to the liquid lens corresponds to at least one of the first restricted area and a third restricted area related to privacy of the passenger seat in the second restricted area; and
> change the focus in a second direction corresponding to a driver seat when one area of the screen corresponding to the liquid lens corresponds to a fourth restricted area related to privacy of the driver seat in the second restricted area.

**12.** The display apparatus of claim 8, further comprising a viewing angle adjustment panel including a liquid crystal layer composed of liquid crystal molecules to allow at least part of light emitted from the screen to pass through,
wherein the signal processing device is configured to output a signal for adjusting an arrangement of the liquid crystal molecules to the viewing angle adjustment panel such that a viewing angle for one area of the screen is adjusted.

**13.** The display apparatus of claim 12, wherein the viewing angle adjustment panel comprises:

> a first liquid layer including first liquid crystal molecules whose arrangement is changed in a first direction that restricts emission of light toward a driver seat; and
> a second liquid layer including second liquid crystal molecules whose arrangement is changed in a second direction that restricts emission of light toward a passenger seat.

**14.** The display apparatus of claim 12, wherein the viewing angle adjustment panel consists of a plurality of sub-units disposed side by side to independently control the arrangement of the liquid crystal molecules, and

wherein the plurality of sub-units respectively correspond to a plurality of areas constituting the screen.

**15.** The display apparatus of claim 14, the signal processing device is configured to:

upon changing a viewing angle for entire one area of the screen, control at least one of the focus variable unit and the viewing angle adjustment panel; and

upon changing a viewing angle for a part of one area of the screen, control the viewing angle adjustment panel.

FIG. 1

FIG. 2

100

180a(Scr1)

180b(Scr2)

180h

170

WS

FIG. 3

FIG. 4A

100

Ws

Ara

310

Scr1(Scr2)
Sfa
1100

320

LTa

LTb

300

FIG. 4B

100

Ws

Ara

310

Scr1(Scr2)
Sfa
365

320

LTa

LTb

300

FIG. 4C

FIG. 5

FIG. 6

FIG. 7A

FIG. 7B

EP 4 769 020 A1

100

170

711 — EXTERNAL ILLUMINANCE SENSOR → Cso

713 — INTERNAL ILLUMINANCE SENSOR → Csi

110 — USER INPUT DEVICE → Csp

SINGAL PROCESSING DEVICE

PGU CONTROLLER — 173

VIEWING ANGLE CONTROLLER — 174

Sco2

Sco1

300 — PGU

305   308

Ws

Ara

IMAGE FORMAT CHANGER

DMD CONTROLLER

DMD

LIGHT SOURCE CONTROLLER

LIGHT SOURCE

LTb → REFLECTIVE MEDIUM (windshield) → Imb

LTa → OPTICAL PATH SEPARATOR

TRANSMISSIVE MEDIUM (Screen 1) → Ima

TRANSMISSIVE MEDIUM (Screen 2) → Imc

Scr1

Scr2

370  302   306   309  400

310   365   1100

30

FIG. 8

FIG. 9

| (A11)<br>R1/G0/B0 | (A12)<br>R3/G1/B0 | (A13)<br>R2/G2/B1 |
|---|---|---|
| (A21)<br>R0/B1/G0 | (A22)<br>R2/B1/G3 | (A23)<br>R2/B2/G0 |
| (A31)<br>R2/B2/G0 | (A32)<br>R2/B2/G0 | (A33)<br>R2/B2/G0 |

FIG. 10

FIG. 11

FIG. 12

1100

```
        ┌─────────────────────────────────────────────┐─── 1201
        │─────────────────────────────────────────────│─── 1231
1110 ⎰  │─────────────────────────────────────────────│─── 1221
     ⎱  │─────────────────────────────────────────────│─── 1211
        │─────────────────────────────────────────────│─── 1222
        └─────────────────────────────────────────────┘─── 1232

1130 ─  ┌─────────────────────────────────────────────┐

        ┌─────────────────────────────────────────────┐─── 1203
        │─────────────────────────────────────────────│─── 1233
1120 ⎰  │─────────────────────────────────────────────│─── 1223
     ⎱  │─────────────────────────────────────────────│─── 1212
        │─────────────────────────────────────────────│─── 1224
        │─────────────────────────────────────────────│─── 1234
        └─────────────────────────────────────────────┘─── 1202
```

FIG. 13

Pol 45° ▨▨▨▨▨▨▨▨▨▨▨▨▨▨▨▨▨▨▨▨ — 1201

45° ▨▨▨▨▨▨▨▨▨▨▨▨▨▨▨▨▨▨▨▨ — 1221

135° ▨▨▨▨▨▨▨▨▨▨▨▨▨▨▨▨▨▨▨▨ — 1222

Pol 135° ▨▨▨▨▨▨▨▨▨▨▨▨▨▨▨▨▨▨▨▨ — 1203

45° ▨▨▨▨▨▨▨▨▨▨▨▨▨▨▨▨▨▨▨▨ — 1223

135° ▨▨▨▨▨▨▨▨▨▨▨▨▨▨▨▨▨▨▨▨ — 1224

Pol 45° ▨▨▨▨▨▨▨▨▨▨▨▨▨▨▨▨▨▨▨▨ — 1202

FIG. 14

FIG. 15

FIG. 16

FIG. 17

<1710>                    <1720>

FIG. 18

FIG. 19

FIG. 20

## FIG. 21

## FIG. 22

FIG. 23

FIG. 24

FIG. 25

FIG. 26

FIG. 27

811          813          815

810

1100

850

851          853          855

FIG. 28

2810

A          B          C          1100

FIG. 29A

(a)

(b)

(c)

FIG. 29B

500

520

COM

Liquid

FIG. 29C

500

550a

540a

550b

540b

LA

LB

530

550d

550c

LD

LC

540c

540d

FIG. 29D

FIG. 30

```
                    ┌─────────────┐
                    │    Start    │
                    └──────┬──────┘
                           │
                           ▼
                      ╱─────────╲         S3010
                    ╱  Correspond ╲
                   ╱ to safety-related╲    No
                  ╱ condition during ╲──────────┐
                   ╲    driving?    ╱            │
                    ╲──────┬──────╱              │
                        Yes│          S3020      │
                           ▼                     │
              ┌──────────────────────────┐       │
              │  Determine restricted     │       │
              │  area related to safety   │       │
              └────────────┬─────────────┘       │
                           │                     │
                           ◄─────────────────────┘
                           ▼
                      ╱─────────╲         S3030
                    ╱  Correspond ╲
                   ╱  to privacy   ╲        No
                  ╱ protection-related╲──────────┐
                   ╲   condition?   ╱            │
                    ╲──────┬──────╱              │
                        Yes│          S3040      │
                           ▼                     │
              ┌──────────────────────────┐       │
              │ Determine restricted area │       │
              │   related to privacy      │       │
              │       protection          │       │
              └────────────┬─────────────┘       │
                           │                     │
                           ◄─────────────────────┘
                           ▼
              ┌──────────────────────────┐
              │  Adjust viewing angle     │── S3050
              │   for restricted area     │
              └────────────┬─────────────┘
                           │
                           ▼
                    ┌─────────────┐
                    │     End     │
                    └─────────────┘
```

FIG. 31

851  3110  853  3120  855

810

10  20

FIG. 32

851  3110  853  3120  855  3210

810

10  20

FIG. 33

FIG. 34

FIG. 35

FIG. 36

FIG. 37

FIG. 38

FIG. 39

FIG. 40

FIG. 41

FIG. 42

FIG. 43

851 3110 853 4310 855

810

10 20

FIG. 44

851 3110 853 855 3210

810

10 20

## FIG. 45

## FIG. 46

## INTERNATIONAL SEARCH REPORT

| | International application No. |
|---|---|
| | **PCT/KR2023/014473** |

| A. | CLASSIFICATION OF SUBJECT MATTER |
|---|---|

G03B 21/14(2006.01)i; G03B 21/28(2006.01)i; G03B 21/53(2006.01)i; G03B 21/60(2006.01)i; B60K 35/00(2006.01)i

According to International Patent Classification (IPC) or to both national classification and IPC

| B. | FIELDS SEARCHED |
|---|---|

Minimum documentation searched (classification system followed by classification symbols)

G03B 21/14(2006.01); B60K 35/00(2006.01); B60K 37/02(2006.01); B60R 1/00(2006.01); B60W 50/14(2012.01); G02B 26/08(2006.01); G02B 27/22(2006.01); H04N 13/305(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디스플레이(display), 투사 영상(projection image), 시야각(viewing angle), 초점 (focus), 배열(array)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2015-0009364 A (LG ELECTRONICS INC.) 26 January 2015 (2015-01-26)<br>See paragraphs [0025]-[0036], [0059] and [0139]; claim 1; and figures 1a-16. | 1-15 |
| Y | KR 10-2022-0123927 A (SAMSUNG ELECTRONICS CO., LTD.) 13 September 2022 (2022-09-13)<br>See paragraphs [0036], [0048]-[0052] and [0062]; and figures 1-15. | 1-15 |
| Y | KR 10-2016-0144008 A (LG DISPLAY CO., LTD.) 15 December 2016 (2016-12-15)<br>See paragraphs [0064]-[0066]; and figures 2-15b. | 2-4,13 |
| A | KR 10-2305917 B1 (ANYRACTIVE. CO., LTD.) 30 September 2021 (2021-09-30)<br>See paragraphs [0027]-[0040]; and figures 1-2. | 1-15 |
| A | US 2019-0094560 A1 (GENTEX CORPORATION) 28 March 2019 (2019-03-28)<br>See paragraphs [0003]-[0006]. | 1-15 |

| ☐ Further documents are listed in the continuation of Box C. | ☑ See patent family annex. |
|---|---|

| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search | Date of mailing of the international search report |
|---|---|
| **20 June 2024** | **21 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/014473**

| Patent document cited in search report | | | Publication date (day/month/year) | Patent family member(s) | | | Publication date (day/month/year) |
|---|---|---|---|---|---|---|---|
| KR | 10-2015-0009364 | A | 26 January 2015 | CN | 104301647 | A | 21 January 2015 |
| | | | | CN | 104301647 | B | 23 February 2018 |
| | | | | EP | 2827591 | A2 | 21 January 2015 |
| | | | | EP | 2827591 | A3 | 19 August 2015 |
| | | | | KR | 10-2129923 | B1 | 03 July 2020 |
| | | | | US | 2015-0022783 | A1 | 22 January 2015 |
| | | | | US | 9521382 | B2 | 13 December 2016 |
| KR | 10-2022-0123927 | A | 13 September 2022 | EP | 4269153 | A1 | 01 November 2023 |
| | | | | US | 2022-0281317 | A1 | 08 September 2022 |
| | | | | WO | 2022-186546 | A1 | 09 September 2022 |
| KR | 10-2016-0144008 | A | 15 December 2016 | KR | 10-2411046 | B1 | 20 June 2022 |
| | | | | US | 2016-0355091 | A1 | 08 December 2016 |
| | | | | US | 9895975 | B2 | 20 February 2018 |
| KR | 10-2305917 | B1 | 30 September 2021 | CN | 117412882 | A | 16 January 2024 |
| | | | | KR | 10-2452391 | B1 | 07 October 2022 |
| | | | | WO | 2022-255577 | A1 | 08 December 2022 |
| US | 2019-0094560 | A1 | 28 March 2019 | CN | 111225830 | A | 02 June 2020 |
| | | | | CN | 111225830 | B | 05 May 2023 |
| | | | | EP | 3687860 | A1 | 05 August 2020 |
| | | | | EP | 3687860 | A4 | 05 August 2020 |
| | | | | EP | 3687860 | B1 | 29 December 2021 |
| | | | | JP | 2020-535067 | A | 03 December 2020 |
| | | | | JP | 7129475 | B2 | 01 September 2022 |
| | | | | KR | 10-2020-0055076 | A | 20 May 2020 |
| | | | | KR | 10-2557322 | B1 | 18 July 2023 |
| | | | | US | 11092819 | B2 | 17 August 2021 |
| | | | | WO | 2019-064233 | A1 | 04 April 2019 |

Form PCT/ISA/210 (patent family annex) (July 2022)

**EP 4 769 020 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1159224 B
- US 10298890 B